# EUROPÄISCHE PATENTSCHRIFT

(11) **EP 1 849 699 B1**
(45) Veröffentlichungstag und Bekanntmachung des Hinweises auf die Patenterteilung: **26.11.2008**
(21) Anmeldenummer: 06008957.0
(22) Anmeldetag: 28.04.2006
(51) Int. Cl.: B62M 11/18, B62L 5/16

(54) **Mehrgangnabe mit Rücktrittbremse**
Multispeed bicycle hub having back pedal brake
Moyeu de bicyclette à plusieurs vitesses avec frein à contre-pédalage

(43) Veröffentlichungstag der Anmeldung: 31.10.2007
(73) Patentinhaber: SHIMANO INC., Osaka 590-8577 (JP)
(72) Erfinder: Okochi, Hiroyuki, Yamaguchi 752-0911 (JP)
(74) Vertreter: Hofmann, Harald

(56) Entgegenhaltungen:
- EP-A- 0 657 347
- EP-A- 0 658 475
- EP-A- 0 795 460
- EP-A- 0 834 685
- EP-A- 1 413 509
- DE-A1- 4 324 935
- DE-A1-9102004 014 23
- DE-C1- 19 518 052
- US-A- 4 973 297
- US-A- 5 322 487

## Beschreibung

Die vorliegende Erfindung bezieht sich auf eine Getriebeanordnung für eine Mehrgangnabe, beispielsweise für ein Fahrrad, und insbesondere auf eine Getriebeanordnung mit zumindest einem ersten und einem zweiten Planetengetriebe sowie einem Rücktrittbremsmechanismus.

Ein Fahrradgetriebe für eine Dreigangnabe mit einem Planetengetriebe und einem Rücktrittbremsmechanismus ist beispielsweise in der EP 795 461 B1 offenbart. Die aus dieser Druckschrift bekannte Anordnung umfasst im Wesentlichen eine feststehende Welle, ein Antriebsteil, eine Nabenhülse, eine Rücktrittbremseinheit sowie eine Mechanik zur Übertragung des Antriebsmoments vom Antriebsteil auf die Nabenhülse. Die Übertragungsmechanik umfasst insbesondere ein Planetengetriebe und eine längsverschieblich betätigbare Kupplungsanordnung, die dem Planetengetriebe vorgeschaltet ist. Einerseits kann durch Steuerung der Kupplungsanordnung ein Antriebsmoment in drei unterschiedlichen Gangstufen übertragen werden. Andererseits kann ein vom Fahrer aufgebrachtes Bremsmoment übertragen werden, wobei die resultierende Bremskraft nicht wesentlich durch die geschaltete Gangstufe beeinflusst wird. Die Zusammenschaltung des Kupplungsmechanismus, des einen Planetengetriebes und der Rücktrittbremseinheit ist für eine Dreigangnabe ausgelegt.

Ein Fahrradgetriebe für eine Fünfgangnabe mit einem Rücktrittbremsmechanismus ist beispielsweise aus der EP-0 383 350 bekannt. Dieses Fahrradgetriebe umfasst im Wesentlichen eine feststehende Welle, ein Antriebsteil, eine Nabenhülse, eine Rücktrittbremseinheit sowie eine Mechanik zur Übertragung des Antriebsmoments vom Antriebsteil auf die Nabenhülse. Die Übertragungsmechanik umfasst insbesondere ein mittels Sonnenradkupplungen steuerbares Planetengetriebe und eine komplizierte Kupplungsanordnung, die dem Planetengetriebe vorgeschaltet ist, wobei dadurch ein Antriebsmoment in unterschiedlichen Gangstufen vom Antriebsteil auf die Nabenhülse übertragen werden kann. Nachteilig ist jedoch, dass eine Bremswirkung, die aus einem vom Fahrer aufgebrachten Bremsmoment resultiert, abhängig von der zum Bremszeitpunkt geschalteten Gangstufe ist. Die resultierende Bremswirkung kann folglich größer oder kleiner als vom Fahrer beabsichtigt sein.

Aus der DE 10 2004 014 239 ist eine Mehrgangnabe für Fahrräder mit einer Rücktrittbremseinrichtung bekannt. Die Getriebeanordnung für diese Mehrgangnabe offenbart alle Merkmale des Oberbegriffs von Anspruch 1. Die Kupplungsmechanismen der Mehrgangnabe bestehen im Wesentlichen aus einem endseitigen Klinkenträger, einer Antriebsklinke, einer ersten Bremsklinke, einem zweiten Hohlrad, einer Fensterhülse, Antriebsklinken, einer Bremsklinke und einem abtriebsseitigen Klinkenträger. Der Bremsmechanismus der Mehrgangnabe wird durch das zweite Hohlrad gesteuert, welches das gesamte Getriebe umschließt und den Bremsmechanismus mit dem Antreiber in Verbindung bringt, und somit einen direkten Übertragungspfad für das Bremsmoment vom Antreiber zur Nabenhülse unter Umgehung der Planetengetriebe bereitstellt. Die Antriebs- und Bremsklinken der Kupplungsmechanismen sind vor den Planetengetrieben angeordnet, wohingegen die Antriebsklinken hinter den Planeterigetrieben angeordnet sind. Am Planetenradträger des Planetengetriebes, welches seiner Position nach dem ersten Planetengetriebe der vorliegenden Erfindung entspricht, ist kein Kupplungsmechanismus bereitgestellt, der zumindest zwei gegenläufig aktive Klinken, umfasst.

Es ist eine Aufgabe der vorliegenden Erfindung, eine Getriebeanordnung mit einem Rücktrittbremsmechanismus für eine Mehrgangnabe zu verbessern. Insbesondere soll der Bremsvorgang für einen Fahrer sicherer und angenehmer erfolgen und eine einfache, kompakte, einen schlanken Aufbau aufweisende Getriebeanordnung geschaffen werden, die trotzdem zuverlässig im Betrieb ist.

Des Weiteren soll der Gangwechsel für einen Fahrer angenehmer erfolgen und somit das Fahrgefühl während des Gangwechsels verbessert werden.

Die Aufgabe wird durch eine Getriebeanordnung, wie durch den unabhängigen Anspruch 1 beschrieben ist, gelöst, wobei zweckmäßige Ausführungsformen durch die Merkmale der Unteransprüche beschrieben sind.

Vorgesehen ist eine Getriebeanordnung für eine Mehrgangnabe mit Rücktrittbremsmechanismus, insbesondere für ein Fahrrad, die im Wesentlichen zumindest ein erstes Planetengetriebe und ein zweites Planetengetriebe, sowie einen Rücktrittbremsmechanismus aufweist. Das zumindest erste Planetengetriebe kann mit dem zweiten Planetengetriebe gekoppelt werden. Außerdem ist ein Kupplungsmechanismus bereitgestellt, der abtriebsseitig von dem ersten Planetengetriebe mit diesem koppelbar ist und dazu geeignet ist, einerseits ein vom Fahrer in Antriebsrichtung aufgebrachtes Antriebsmoment in Abhängigkeit einer gewählten Gangstufe, d.h. eines gewählten Ganges zu übertragen und weiterzuleiten, und andererseits ein vom Fahrer in Bremsrichtung aufgebrachtes Bremsmoment unabhängig von einer gewählten Gangstufe über einen einzigen Pfad (BP 1) zu übertragen und zu dem Bremsmechanismus hin weiterzuleiten, so dass die resultierende Bremswirkung unabhängig von der gewählten Gangstufe im Wesentlichen gleich ist. Der Kupplungsmechanismus umfasst ferner zumindest zwei gegenläufig aktive Klinken, welche an einem Planetenradträger des ersten Planetengetriebes bereitgestellt sind.

Wie es Fachleuten ersichtlich ist, umfasst ein Planetengetriebe im Wesentlichen, aber nicht einschränkend, zumindest ein um eine feststehende Welle einer Mehrgangnabe herum angeordnetes Sonnenrad, mit dem zumindest einen Sonnenrad in Eingriff tretende Planetenräder, einen die Planetenräder tragenden Planetenradträger und üblicherweise ein mit den Planetenrädern in Eingriff stehendes Hohlrad und optional zumindest eine zwischen dem zumindest einen Sonnenrad und der feststehenden Welle angeordnete Sonnenradkupplung, die so angeordnet und ausgelegt ist, dass sie mittels einer Steuereinrichtung betätigbar ist. Die erfmdungsgemäße Getriebeanordnung kann in eine Mehrgangnabe involviert werden, die im Wesentlichen, aber nicht einschränkend, die vorstehend genannte feststehende Welle, einen Antreiber und eine Nabenhülse umfasst, die beide drehbar auf der feststehenden Welle abgestützt sind.

Bei einer vorteilhaften Ausgestaltung weist die Getriebeanordnung zwei Planetengetriebe auf, die in axialer Richtung voneinander beanstandet sind. Dabei ist das erste Planetengetriebe zweistufig ausgebildet, wobei die antriebsseitigen Planetenräder einen größeren Durchmesser als die abtriebsseitigen Planetenräder aufweisen.

Vorzugsweise umfasst der Kupplungsmechanismus ein Hohlrad mit einem antriebsseitigen Zahnkranz, der an einer inneren Umfangsfläche des Hohlrads bereitgestellt ist und dazu geeignet ist, mit zumindest einem abtriebsseitigen Planetenrad des ersten Planetengetriebes in Eingriff zu treten, und einer abtriebsseitigen Zahnkranzanordnung, die zwei in axialer Richtung versetzte Zahnkränze umfasst, die an einer inneren Umfangsfläche des Hohlrads bereitgestellt sind.

Des Weiteren umfasst der Kupplungsmechanismus ein röhrenförmiges Kopplungselement, das eine Wirkverbindung zum zweiten Planetengetriebe herstellen kann. Das Kopplungselement weist einen ersten Zahnkranz auf, der auf einer äußeren Umfangsfläche am antriebsseitigen Ende des Kopplungselements bereitgestellt ist und dazu geeignet ist, mit einem ersten Zahnkranz der Zahnkranzanordnung des Hohlrads in Eingriff zu treten. Außerdem hat das Kopplungselement einen zweiten Zahnkranz, der auf einer inneren Umfangsfläche am antriebsseitigen Ende des Kopplungselements bereitgestellt ist.

Außerdem umfasst der Kupplungsmechanismus einen abtriebsseitigen Teil eines Planetenradträgers des ersten Planetengetriebes, der dazu geeignet ist, mittels zumindest einer Antriebsklinke und/oder zumindest einer Bremsklinke in selektiver Momentübertragungsverbindung mit dem zweiten Zahnkranz des Kopplungselements zu stehen.

Vorzugsweise sind die zumindest eine Antriebsklinke und die zumindest eine Bremsklinke in jeweiligen peripheren Aussparungen am abtriebsseitigen Teil des Planetenradträgers des ersten Planetengetriebes gegenläufig bereitgestellt und in radialer Richtung zu dem zweiten Zahnkranz des Kopplungselements hin gespannt. Bei einer vorteilhaften Ausgestaltung können sowohl die zumindest eine Antriebsklinke als auch die zumindest eine Bremsklinke jeweils eine steile Fläche, die dazu geeignet ist, mit dem zweiten Zahnkranz des Kopplungselements in Eingriff zu treten, und eine abgeflachte Fläche umfassen, die nicht in Momentübertragungseingriff gelangt.

Des Weiteren ist vorzugsweise eine Ringfeder so bereitgestellt, dass der abtriebsseitige Teil des Planetenradträgers des ersten Planetengetriebes mit dem Hohlrad in mittels dieser Ringfeder Wirkverbindung gebracht werden kann. Die Ringfeder ist in einer inneren Umfangsnut des Hohlrads bereitgestellt.

Vorzugsweise ist der antriebsseitige Teil des Planetenradträgers des ersten Planetengetriebes dazu geeignet, als Antriebsteil zu wirken.

Bei einer vorteilhaften Ausgestaltung sind Vertiefungen des ersten Zahnkranzes der Zahnkranzanordnung des Hohlrads in Umfangsrichtung größer als in diese Vertiefungen eingreifende Vorsprünge des ersten Zahnkranzes des Kopplungselements, so dass sich ein Zwischenraum ergibt. Folglich können sie diese Elemente relativ zu einander in Umfangsrichtung bewegen.

Das Hohlrad, insbesondere der zweite Zahnkranz der Zahnkranzanordnung des Hohlrads ist dazu geeignet, sich in Abhängigkeit der Drehrichtung relativ zu dem Kopplungselement, insbesondere zu dem zweiten Zahnkranz des Kopplungselements zu drehen, wobei dadurch eine Ausrichtung der beiden Elemente erreicht werden kann.

Der zweite Zahnkranz der Zahnkranzanordnung des Hohlrads weist Vorsprünge auf, die dazu geeignet sind, die zumindest eine Bremsklinke zu deaktivieren, wobei diese so angeordnet, angepasst und ausrichtbar sind, dass die zumindest eine Bremsklinke davon abgehalten wird, während einer Antriebsmomentübertragung über einen Pfad P2 mit dem zweiten Zahnkranz des Kopplungselements in Momentübertragungseingriff zu gelangen, wobei während einer Bremsmomentübertragung über einen Pfad P1 ein Eingriff der zumindest einen Bremsklinke mit dem zweiten Zahnkranz des Kopplungselements möglich ist.

Die Vorsprünge zum Deaktivieren der zumindest einen Bremsklinke sind so angeordnet, angepasst und ausrichtbar, dass während einer Antriebs- oder Momentübertragung über einen Pfad P1 die zumindest eine Antriebsklinke und/oder die zumindest eine Bremsklinke in der Lage ist, mit dem zweiten Zahnkranz des Kopplungselements in Momentübertragungseingriff zu treten.

Die vorstehend genannte Ringfeder steht mittels eines Hakens, der mit Spiel in einer peripheren Ausnehmung am abtriebsseitigen Teil des Planetenradträgers des ersten Planetengetriebes angeordnet ist, mit dieser Ausnehmung wechselseitig in Eingriff. Bei einer bevorzugen Ausführungsform ist die Ringfeder dazu geeignet, in Abhängigkeit einer Drehrichtung wahlweise zu expandieren bzw. sich auszuweiten oder zu kontrahieren bzw. sich zusammenzuziehen, wobei eine Reibung zwischen der Ringfeder und dem Hohlrad vergrößert oder verkleinert werden kann. Dies kann für einen Ausrichtvorgang des Hohlrades mit dem Kopplungselement erfolgen, insbesondere für eine Ausrichtung des zweiten Zahnkranzes der Zahnkranzanordnung des Hohlrads mit der zweiten Zahnkranzanordnung des Kopplungselements.

Des Weiteren kann die Getriebeanordnung eine Abtriebswahleinrichtung aufweisen, die mittels einer Steuereinrichtung längsverschieblich betätigbar ist, so dass der Abtrieb entweder über eine erste Abtriebskupplung oder über eine zweite Abtriebskupplung erfolgt.

Abtriebsseitig von dem zweiten Planetengetriebe sind Bremsteile mit einem Rollengehäuse verbunden, die während eines Bremsvorgangs radial nach Außen gedrückt werden.

Des Weiteren kann jeweils eine Sonnenradkupplung zwischen den Planetenrädern der Planetengetriebe und der feststehenden Welle angeordnet sein. Vorzugsweise ist jeweils eine Sonnenradkupplung zwischen der feststehenden Welle und den Sonnenrädern des ersten Planetengetriebes angeordnet.

Das Kopplungselement ist dazu geeignet, die zumindest zwei Planetengetriebe so miteinander zu Koppeln bzw. so eine Wirkverbindung zwischen den zumindest zwei Planetengetrieben zu ermöglichen, dass eine permanente Synchronisation zwischen den zumindest zwei Planetengetrieben erreicht wird.

Die Steuervorrichtung kann so betätigt werden, dass durch Steuern der vorzugsweise zwei Sonnenradkupplungen am ersten Planetengetriebe und der Abtriebswahleinrichtung eine Vielzahl von Gängen zur Verfügung gestellt wird.

Bei einer vorteilhaften Ausgestaltung ist das erste Planetengetriebe zweistufig und das zweite Planetengetriebe einstufig ausgebildet, so dass sich ein Fünfganggetriebe ergibt.

Der eine Bremsmomentübertragungspfad entspricht vorzugsweise im Wesentlichen dem Übertragungspfad der ersten Gangstufe, führt jedoch nicht über die zweite Abtriebskupplung zur Nabenhülse, sondern über den Bremsmechanismus.

Andere Aufgaben, Vorteile und nützliche Merkmale der vorliegenden Erfindung werden Fachleuten aus der nachfolgenden detaillierten Beschreibung ersichtlich, die in Verbindung mit den beigefügten Zeichnungen eine bevorzugte Ausführungsform der vorliegenden Erfindung offenbart.

### Kurzbeschreibung der Zeichnungen

- Figur 1: ist ein Teillängsschnitt einer in eine Mehrgangnabe eines Fahrrads eingebauten Getriebeanordnung mit einem Rücktrittbremsmechanismus gemäß der vorliegenden Erfindung;
- Figur 2: ist eine perspektivische Ansicht eines Hohlrads der Getriebeanordnung gemäß der vorliegenden Erfindung;
- Figur 3: ist eine Draufsicht des Hohlrades der Getriebeanordnung gemäß der vorliegenden Erfindung;
- Figur 4: ist eine perspektivische Ansicht eines Kopplungselements der Getriebeanordnung gemäß der vorliegenden Erfindung;
- Figur 5: ist eine Vorderansicht des Kopplungselements der Getriebeanordnung gemäß der vorliegenden Erfindung;
- Figur 6: ist eine Seitenansicht des Kopplungselements der Getriebeanordnung gemäß der vorliegenden Erfindung;
- Figur 7: ist eine schematische Darstellung eines Querschnitts durch einen Kupplungsmechanismus der Getriebeanordnung gemäß der vorliegenden Erfindung, in einer ersten Gangstufe;
- Figur 8: ist eine schematische Darstellung eines Querschnitts durch den Kupplungsmechanismus der Getriebeanordnung gemäß der vorliegenden Erfindung, wenn ausgehend von der ersten Gangstufe ein Bremsmoment aufgebracht wird;
- Figur 9: ist eine schematische Darstellung eines Querschnitts durch den Kupplungsmechanismus der Getriebeanordnung gemäß der vorliegenden Erfindung, wenn ausgehend von der ersten Gangstufe ein Bremsmoment aufgebracht wird;
- Figur 10: ist eine schematische Darstellung eines Querschnitts durch den Kupplungsmechanismus der Getriebeanordnung gemäß der vorliegenden Erfindung, wenn ausgehend von der ersten Gangstufe ein Bremsmoment aufgebracht wird;
- Figur 11: ist eine schematische Darstellung eines Querschnitts durch den Kupplungsmechanismus der Getriebeanordnung gemäß der vorliegenden Erfindung, in der zweiten, dritten, vierten oder fünften Gangstufe;
- Figur 12: ist eine schematische Darstellung eines Querschnitts durch den Kupplungsmechanismus der Getriebeanordnung gemäß der vorliegenden Erfindung, wenn ausgehend von der zweiten, dritten, vierten oder fünften Gangstufe ein Bremsmoment aufgebracht wird;
- Figur 13: ist eine schematische Darstellung eines Querschnitts durch den Kupplungsmechanismus der Getriebeanordnung gemäß der vorliegenden Erfindung, wenn ausgehend von der zweiten, dritten, vierten oder fünften Gangstufe ein Bremsmoment aufgebracht wird;
- Figur 14: ist eine schematische Darstellung eines Querschnitts durch den Kupplungsmechanismus der Getriebeanordnung gemäß der vorliegenden Erfindung, wenn ausgehend von der zweiten, dritten, vierten oder fünften Gangstufe ein Bremsmoment aufgebracht wird;
- Figur 15: ist ein Teillängsschnitt der Getriebeanordnung gemäß der vorliegenden Erfindung, mit dargestelltem Antriebsmomentübertragungspfad des ersten Gangs;
- Figur 16: ist ein Teillängsschnitt der Getriebeanordnung gemäß der vorliegenden Erfindung, mit dargestelltem Antriebsmomentübertragungspfad des zweiten Gangs;
- Figur 17: ist ein Teillängsschnitt der Getriebeanordnung gemäß der vorliegenden Erfindung, mit dargestelltem Antriebsmomentübertragungspfad des dritten Gangs;
- Figur 18: ist ein Teillängsschnitt der Getriebeanordnung gemäß der vorliegenden Erfindung, mit dargestelltem Antriebsmomentübertragungspfad des vierten Gangs;
- Figur 19: ist ein Teillängsschnitt der Getriebeanordnung gemäß der vorliegenden Erfindung, mit dargestelltem Antriebsmomentübertragungspfad des fünften Gangs;
- Figur 20: ist ein Teillängsschnitt der Getriebeanordnung gemäß der vorliegenden Erfindung ist, mit dargestelltem Bremsmomentübertragungspfad;

### Beschreibung eines bevorzugten Ausführungsbeispiels

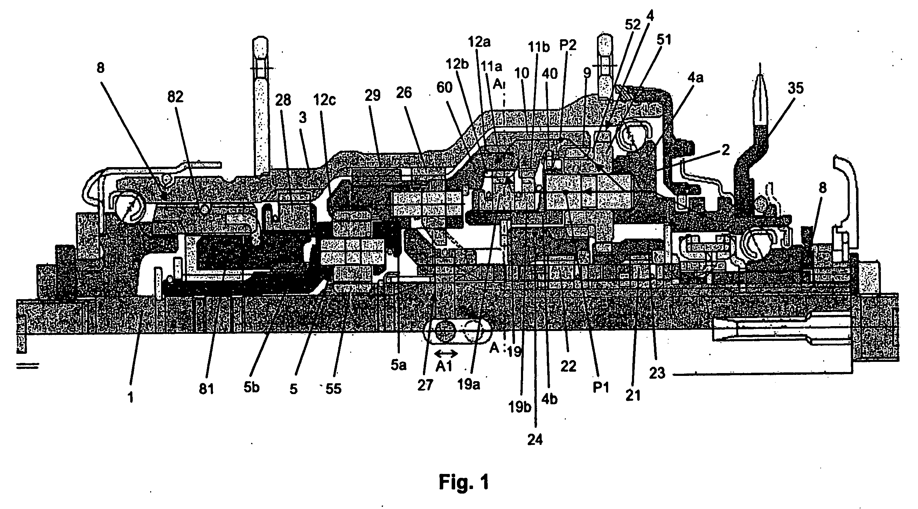

Nachfolgend wird unter Bezugnahme auf die Figuren 1 bis 20 ein bevorzugtes Ausführungsbeispiel der vorliegenden Erfindung näher beschrieben.

Die Figur 1 zeigt eine Mehrgangnabe mit einer Getriebeanordnung und einem Rücktrittbremsmechanismus gemäß der vorliegenden Erfindung, die zum Einsatz bei einem Fahrrad geeignet ist. Der dargestellte Aufbau umfasst im Wesentlichen, aber nicht einschränkend, eine an einem Fahrradrahmen befestigte feststehende Welle 1, ein drehbares Antriebsteil 2, eine drehbare Nabenhülse 3, eine erste Abtriebskupplung 26, eine zweite Abtriebskupplung 28, eine Abtriebswahleinrichtung 27, ein Kettenrad 35, ein erstes Planetengetriebe 4, ein zweites Planetengetriebe 5 und ein Kopplungselement 60.

Das erste Planetengetriebe 4 umfasst einen vorzugsweise einstückig ausgebildeten Planetenradträger, der einen antriebsseitigen Teil 4a und einen abtriebsseitigen Teil 4b aufweist. Im vorliegenden Ausführungsbeispiel wirkt der antriebsseitige Teil 4a des Planetenradträgers 4a, 4b als Antriebsteil 2. Das erste Planetengetriebe 4 weist ein erstes Sonnenrad 23 und ein zweites Sonnenrad 24 auf, die beide auf der feststehenden Welle 1 in Längsrichtung unverschieblich gelagert sind. Das erste Sonnenrad 23 kann mit zumindest einem ersten Planetenrad 51 und das zweite Sonnenrad 24 kann mit zumindest einem zweiten Planetenrad 52 in Eingriff gebracht werden, wobei das erste Planetenrad 51 einen größeren Durchmesser als das zweite Planetenrad 52 aufweist. Zwischen den Sonnenrädern 23 und 24 und der feststehenden Welle 1 ist jeweils eine Sonnenradkupplung 21 und 22 angeordnet. Die Sonnenradkupplungen 21 und 22 können selektiv mit der feststehenden Welle 1 so in Eingriff gebracht werden, dass ein Antriebsmoment übertragen oder nicht übertragen wird. Die Sonnenradkupplungen 21 und 22 und somit das erste Planetengetriebe 4 können mittels einer Steuereinrichtung 8 so betätigt werden, dass daraus eine Vielzahl von Gangstufen resultiert. Das Planetengetriebe 4 ist zweistufig ausgebildet, das heißt, hat Planetenradpaare, die Planetenräder 51, 52 mit unterschiedlichen Durchmessern aufweisen.

Das zweite Planetengetriebe 5 weist zumindest ein Planetenrad 55 und einen Planetenradträger auf, der einen antriebsseitigen Teil 5a und einen abtriebsseitigen Teil 5b umfasst. Das zweite Planetengetriebe 5 ist einstufig ausgebildet, hat also keine Planetenräder mit unterschiedlichem Durchmesser. Außerdem wird es nicht mittels einer Sonnenradkupplung gesteuert. Zwischen dem abtriebsseitigen Teil 5b des Planetenradträgers 5a, 5b des zweiten Planetengetriebes 5 und der Nabenhülse 3 ist ein Rollengehäuse 81 angeordnet, das mit einer Abtriebskupplung 28, die einseitig wirksam ausgebildet sein kann, und Bremsteilen 82 in Verbindung steht. In Abhängigkeit von der Drehrichtung des Planetenradträgers 5a, 5b ist entweder die Abtriebskupplung 28 aktiv, das heißt, ein Antriebsmoment wird übertragen, oder die Bremsteile 82 sind aktiv, das heißt, ein Bremsmoment wird übertragen, wobei die Bremsteile 82 radial nach Außen gedrückt werden und somit ein Bremsvorgang stattfindet. Der Planetenradträger 4a, 4b des ersten Planetengetriebes 4 sowie der Planetenradträger 5a, 5b des zweiten Planetengetriebes 5 sind vorzugsweise einstückig ausgebildet.

Des Weiteren ist ein Kupplungsmechanismus bereitgestellt, der abtriebsseitig mit dem ersten Planetengetriebe 4 gekoppelt ist und dazu geeignet ist, einerseits ein vom Fahrer in Antriebsrichtung aufgebrachtes Antriebsmoment in Abhängigkeit einer gewählten Gangstufe zu übertragen und weiterzuleiten, und andererseits ein vom Fahrer in Bremsrichtung aufgebrachtes Bremsmoment unabhängig von einer gewählten Gangstufe über einen Pfad P1 bzw. BP zu übertragen und zu dem Bremsmechanismus weiterzuleiten, so dass die resultierende Bremswirkung unabhängig von der gewählten Gangstufe im Wesentlichen gleich ist.

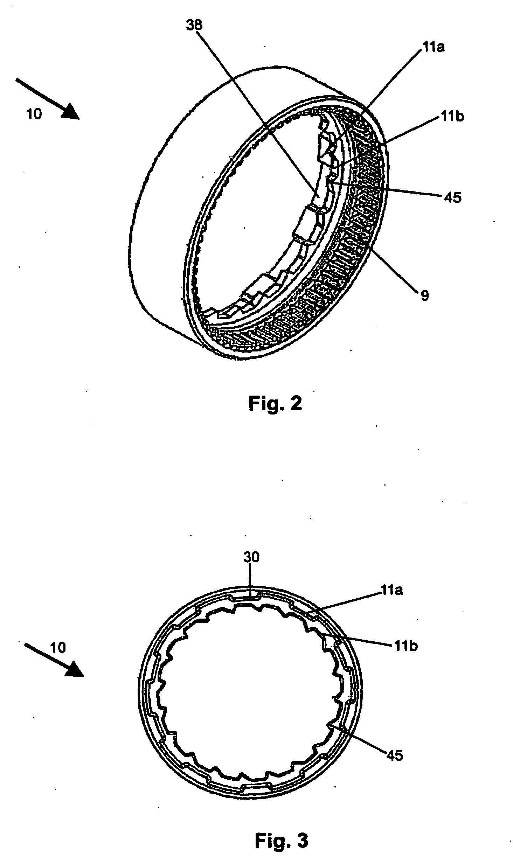

Der Kupplungsmechanismus umfasst ein Hohlrad 10, welches detaillierter in den Figuren 2 und 3 gezeigt ist, mit einem antriebsseitigen Zahnkranz 9, der an einer inneren Umfangsfläche des Hohlrads 10 bereitgestellt ist und dazu geeignet ist, mit zumindest einem abtriebsseitigen Planetenrad 52 des ersten Planetengetriebes 4 in Eingriff zu treten, und einer abtriebsseitigen Zahnkranzanordnung 11 a, 11b, die zwei in axialer Richtung versetzte Zahnkränze 11 a, 11b umfasst, die an einer inneren Umfangsfläche des Hohlrads 10 bereitgestellt sind. Der erste Zahnkranz 11 a ist am abtriebsseitigen Ende des Hohlrads 10 bereitgestellt, wobei sich der zweite Zahnkranz 11b antriebsseitig benachbart zu diesem befindet. Wie dies beispielsweise in der 2 gezeigt ist, sind die Vorsprünge bzw. Zähne und die Aussparungen bzw. Vertiefungen der Zahnkränze 11a, 11b und 9 des Hohlrades 10 jeweils im Wesentlichen gleichmäßig in Umfangsrichtung angeordnet.

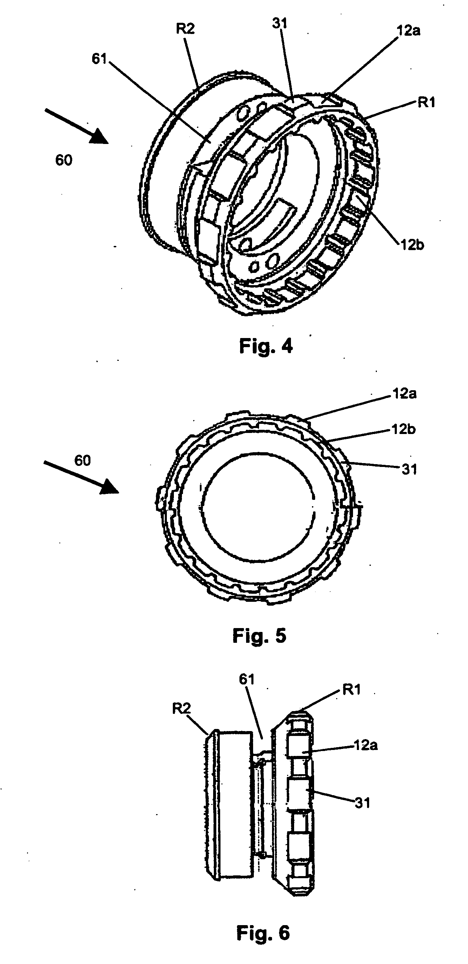

Des Weiteren umfasst der Kupplungsmechanismus das röhrenförmige, bevorzugt einstückig ausgebildete Kopplungselement 60, das eine Wirkverbindung zu dem zweiten Planetengetriebe 5 bzw. bezüglich des Kupplungsmechanismus abtriebsseitig angeordneten Getriebeteilen herstellen kann. Das Kopplungselement 60, das detaillierter in den Figuren 4, 5 und 6 gezeigt ist, weist einen ersten Zahnkranz 12a auf, der auf einer äußeren Umfangsfläche am antriebsseitigen Ende des Kopplungselements 60 bereitgestellt ist und dazu geeignet ist, mit dem ersten Zahnkranz 11 a der Zahnkranzanordnung 11 a, 11 b des Hohlrads 10 in Eingriff zu treten. Außerdem hat das Kopplungselement 60 einen zweiten Zahnkranz 12b, der auf einer inneren Umfangsfläche am antriebsseitigen Ende des Kopplungselements 60 bereitgestellt ist. Wie dies beispielsweise in der 4 gezeigt ist, sind die Vorsprünge bzw. Zähne und die Aussparungen bzw. Vertiefungen der Zahnkränze 12a und 12b des Kopplungselements 60 jeweils im Wesentlichen gleichmäßig in Umfangsrichtung angeordnet.

In den Kupplungsmechanismus involviert ist auch der abtriebsseitige Teil 4b des Planetenradträgers 4a, 4b des ersten Planetengetriebes 4, der mittels einer Kupplung 19 in selektiver Momentübertragungsverbindung mit dem zweiten Zahnkranz 12b des Kopplungselements 60 steht. Die Kupplung 19 umfasst zumindest eine Antriebsklinke DP und/oder zumindest eine Bremsklinke BP. Das Bezugszeichen 19a kennzeichnet eine Antriebsklinke DP und eine Bremsklinke BP, wohingegen das Bezugszeichen 19b lediglich eine Bremsklinke BP kennzeichnet. Mit anderen Worten heißt das, dass die Antriebsklinken DP einklinkig ausgebildet sind, während die Bremsklinken BP zweiklinkig ausgebildet sind, vorzugsweise einstückig. Der Teil 19b der Bremsklinken BP steht mit dem zweiten Zahnkranz 11b der Zahnkranzanordnung 11a, 11b des Hohlrads 10 in Wirkverbindung, während der andere Teil mit dem zweiten Zahnkranz 12b des Kopplungselements 60 in Wirkverbindung steht.

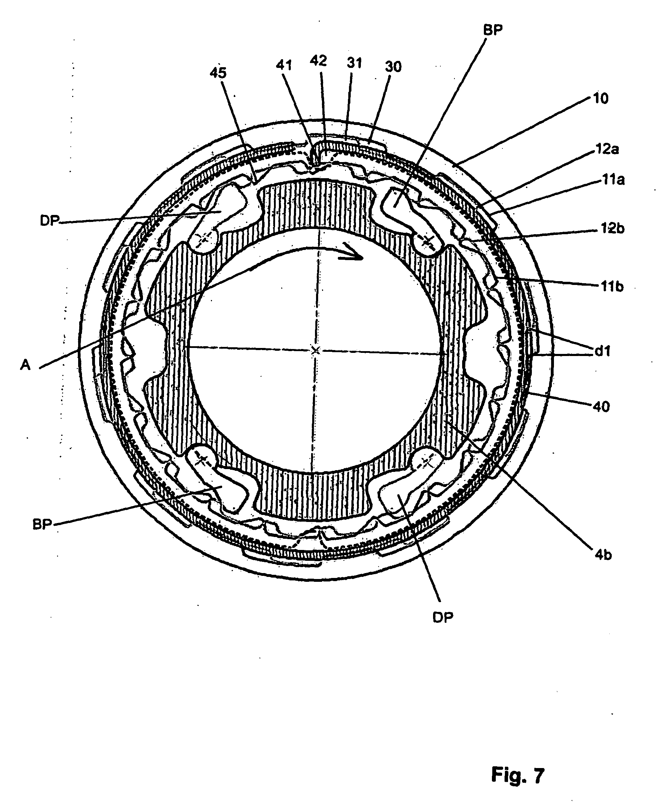

Die Antriebsklinken DP und die Bremsklinken BP sind gegenläufig aktiv und in radialer Richtung zu dem zweiten Zahnkranz 12b des Kopplungselements 60 hin gespannt. Wie beispielsweise in der Figur 7 gezeigt ist, umfasst eine Antriebsklinke DP eine steile Fläche zum Eingriff mit dem zweiten Zahnkranz 12b des Kopplungselements 60 bei einer Antriebsmomentübertragung. Die Bremsklinke BP umfasst eine steile Fläche zum Eingriff mit dem zweiten Zahnkranz 12b des Kopplungselements 60 bei einer Bremsmomentübertragung.

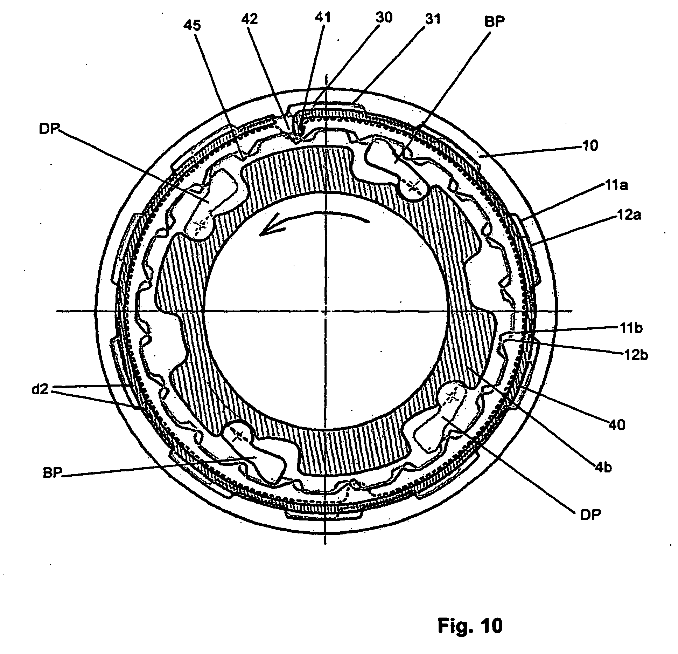

Die steile Fläche der Antriebsklinken DP kommt bei Drehung des abtriebsseitigen Teils 4b des Planetenradträgers 4a, 4b in Antriebsrichtung, das heißt bei einer Antriebsmomentübertragung über den Pfad P1, mit dem zweiten Zahnkranz 12b des Kopplungselements 60 in Momentübertragungseingriff, während eine abgeflachte Fläche der Bremsklinken BP über den zweiten Zahnkranz 12b des Kopplungselements 60 gleitet (vergleiche Figur 7). Umgekehrt kommt die steile Fläche der Bremsklinken BP bei Drehung des abtriebsseitigen Teils 4b des Planetenradträgers 4a, 4b in Bremsrichtung mit dem zweiten Zahnkranz 12b des Kopplungselements 60 in Momentübertragungseingriff, während eine abgeflachte Fläche der Antriebsklinken DP über den zweiten Zahnkranz 12b des Kopplungselements 60 gleitet (vergleiche Figur 10). Die Antriebsklinken DP und die Bremsklinken BP sind in Umfangsrichtung voneinander beabstandet und in jeweiligen Aussparungen in dem abtriebsseitigen Teil 4b des Planetenradträgers 4a, 4b des ersten Planetengetriebes 4 untergebracht. Folglich ist ein kompakter und schlanker Aufbau möglich.

Der Pfad P1 führt von dem Antriebsteil 2 zum abtriebsseitigen Teil 4a des Planetenradträgers 4a, 4b und von dort über die Kupplung 19 zum Kopplungselement 60. Der Pfad P2 führt von dem Antriebsteil 2 zum Planetengetriebe 4 und unter Einbeziehung der Planetenräder 51, 52, zum Hohlrad 10 und von diesem zum Kopplungselement 60.

Vertiefungen 30 des ersten Zahnkranzes 11a der Zahnkranzanordnung 11a, 11b des Hohlrads 10 sind in Umfangsrichtung größer als in diese Vertiefungen 30 eingreifende Vorsprünge 31 des ersten Zahnkranzes 12a des Kopplungselements 60, so dass sich ein Zwischenraum d1 ergibt, wie dies beispielsweise in der Figur 7 gezeigt ist. Das Hohlrad 10 ist somit in der Lage, sich relativ zu dem Kopplungselement 60 in Umfangsrichtung zu bewegen. Folglich kann sich insbesondere der zweite Zahnkranz 11b der Zahnkranzanordnung 11 a, 11b relativ zu dem zweiten Zahnkranz 12b des Kopplungselements 60 bewegen und entsprechend ausrichten.

Der zweite Zahnkranz 11b der Zahnkranzanordnung 11a, 11b des Hohlrads 10 hat Vorsprünge 45, die dazu geeignet sind, die Antriebsklinken DP und/oder die Bremsklinken BP zu deaktivieren. Diese Vorsprünge 45 sind so angeordnet, angepasst und in Umfangsrichtung ausrichtbar, dass die Antriebsklinken DP und/oder die Bremsklinken BP davon abgehalten werden, während einer Antriebsmomentübertragung über einen Pfad P2 mit dem zweiten Zahnkranz 12b des Kopplungselements 60 in Momentübertragungseingriff zu gelangen, wobei während einer Bremsmomentübertragung über einen Pfad P1 ein Eingriff der Bremsklinken BP mit dem zweiten Zahnkranz 12b des Kopplungselements 60 und somit eine Weiterleitung des Bremsmoments zum Bremsmechanismus 8 hin möglich ist.

Die Vorsprünge 45 zum Deaktivieren sind des Weiteren so angeordnet, angepasst und in Umfangsrichtung ausrichtbar, dass während einer Antriebs- oder Bremsmomentübertragung über den Pfad P 1 die Antriebsklinken DP oder die Bremsklinken BP in der Lage sind, mit dem zweiten Zahnkranz 12b des Kopplungselements 60 in Eingriff zu treten, so dass folglich die Weiterleitung eines Antriebs- oder Bremsmoments möglich ist.

Des Weiteren ist eine Ringfeder 40 in eine innere Umfangsnut am Hohlrad 10 eingesetzt. Die Ringfeder 40 steht mittels eines Hakens 41, der mit Spiel in einer peripheren Ausnehmung 42 am abtriebsseitigen Teil 4b des Planetenradträgers 4a, 4b des ersten Planetengetriebes 4 angeordnet ist, mit dieser Ausnehmung 42 wechselseitig in Eingriff. Der Haken 41 erstreckt sich von einem Ende der Ringfeder 40 radial nach Innen. Durch Expansion bzw. Aufweitung in Abhängigkeit der Drehrichtung kann die Ringfeder 40 mit dem Hohlrad 10 mittels einer zwischen diesen auf- und abbaubaren Reibung bzw. Reibmoment in selektiver Wirkverbindung stehen. Das Hohlrad 10 kann mittels des Reibmoments, das zwischen dem Hohlrad 10 und der Ringfeder 40 auftritt, relativ zu dem Kopplungselement 60 gedreht werden. Die Ringfeder 40 dreht sich aufgrund des in der Ausnehmung 42 angeordneten Hakens 41 mit dem antreibend abtriebsseitigen Teil 4b des Planetenradträgers 4a, 4b des ersten Planetengetriebes 4.

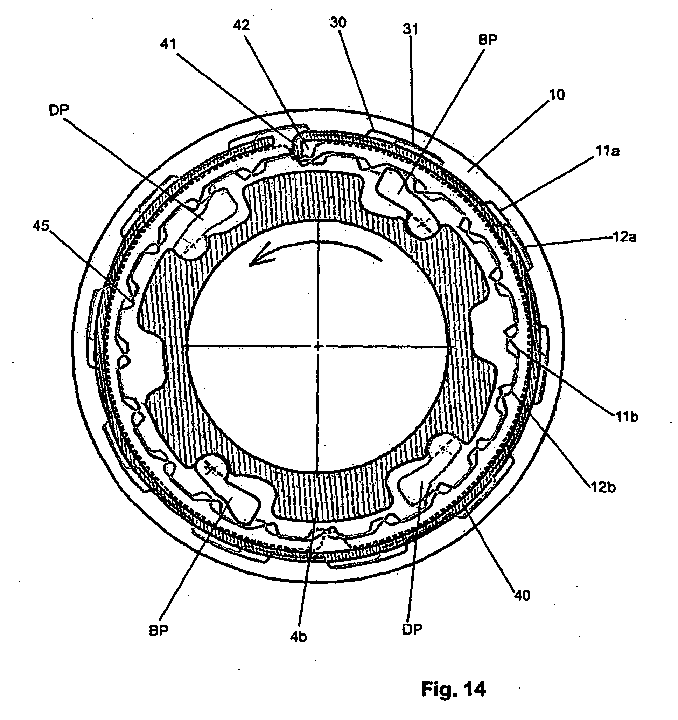

Prinzipiell arbeitet die Ringfeder 40 auf die Folgende Art und Weise, wobei die Funktion der Ringfeder 40 des Weiteren unter Bezugnahme auf die Figuren 14 bis 19 deutlich wird.

Wenn sich der Planetenradträger 4a, 4b in Antriebsrichtung dreht, dreht sich die Ringfeder 40 auch in Antriebsrichtung. Dann dreht sich das Hohlrad 10 in Antriebsrichtung relativ zu dem Kopplungselement 60 mittels der Ringfeder 40. In diesem Fall weitet sich die Ringfeder 40 zu dem Hohlrad 10 aus, wobei die Reibung zwischen der Ringfeder 40 und dem Hohlrad 10 größer wird.

Wenn sich der Planetenradträger 4a, 4b des ersten Planetengetriebes 4 in einer der Antriebsrichtung entgegengesetzten Bremsrichtung dreht, dreht sich die Ringfeder 40 auch in Bremsrichtung. Dann dreht sich das Hohlrad 10 in Bremsrichtung relativ zu dem Kopplungselement 60 mittels der Ringfeder 40. Da sich in diesem Fall die Ringfeder 40 zusammenzieht bzw. kontrahiert, verringert sich die Reibung zwischen der Ringfeder 40 und dem Hohlrad 10 im Vergleich zum Antriebsfall.

Aufgrund des vorstehend beschriebenen Aufbaus kann sich der zweite Zahnkranz 11b des Hohlrads 10 relativ zu dem zweiten Zahnkranz 12b des Kopplungselements 60 drehen bzw. in Umfangsrichtung ausrichten. Wenn sich beispielsweise der zweite Zahnkranz 11b des Hohlrads 10 im Gegenuhrzeigersinn relativ zu dem zweiten Zahnkranz 12b des Kopplungselements 60 dreht bzw. gedreht hat, können die Bremsklinken BP mit dem zweiten Zahnkranz 12b des Kopplungselements 60 in Momentübertragungseingriff gelangen. Folglich kann das Hohlrad 10 sich relativ zu dem Kopplungselement 60 drehen, mittels Reibung bzw. mittels eines Reibmoments, das zwischen dem Hohlrad 10 und der Ringfeder 40 ausgebildet werden kann.

Das Kopplungselement 60 steht mit einem Schaft einer ersten Abtriebskupplung 26 zwischen seinem antriebsseitigen Ende und seinem abtriebsseitigen Ende beidseitig in Eingriff. Die erste Abtriebskupplung 26, die einseitig wirksam ist, kann dazu in einer peripheren Ausnehmung bzw. einem Durchlass 61, der sich in dem Kopplungselement 60 befindet, angeordnet sein, wie dies beispielsweise in den Figuren 4 und 6 gezeigt ist. Benachbart zur ersten Abtriebskupplung 26 befindet sich ein Klinkengehäuse 29. Das Klinkengehäuse 29 ist abtriebsseitig von der ersten Abtriebskupplung 26 angeordnet und steht mit einem inneren Zahnkranz der Nabenhülse 3, der ersten Abtriebskupplung 26 und dem abtriebseitigen Ende des Kopplungselements 60 in Wirkverbindung. Beim Bremsvorgang gelangt das Klinkengehäuse 29 mit dem entsprechenden inneren Zahnkranz der Nabenhülse 3 in Eingriff und wird mit der Nabenhülse 3 gedreht. Die Wirkweise eines solchen Klinkengehäuses 29 ist Fachleuten bekannt.

Das Kopplungselement 60 umfasst des Weiteren an seinem abtriebseitigen Ende einen Zahnkranz 12c, der an einer inneren Umfangsfläche des Kopplungselements 60 bereitgestellt ist und mit Planetenrädern 55 des zweiten Planetengetriebes 5 in Eingriff steht. Das Kopplungselement 60 koppelt das erste Planetengetriebe 4 so mit dem zweiten Planetengetriebe 5 bzw. mit dem abtriebsseitig von dem ersten Planetengetriebe 4 befindlichen Kupplungsmechanismus, dass eine permanente Synchronisation zwischen den zwei Planetengetrieben 4, 5 erreicht wird. Im vorliegenden Ausführungsbeispiel umfasst das Kopplungselement 60 zwei unterschiedliche Außendurchmesser R1, R2, die aus einer schrägen Abtreppung oder einem schrägen Versatz resultieren, wobei der antriebsseitige Außendurchmesser R1 größer ist als der abtriebsseitige Außendurchmesser R2. Fachleuten ist es ersichtlich, dass ein großer Außendurchmesser einem großen Innendurchmesser entspricht und ein kleiner Außendurchmesser einem kleinen Innendurchmesser entspricht.

Des Weiteren weist die Getriebeanordnung eine Abtriebswahleinrichtung 27 auf, die mittels einer Steuereinrichtung 8 längsverschieblich betätigbar ist, so dass der Abtrieb entweder über die erste Abtriebskupplung 26 oder über die zweite Abtriebskupplung 28 erfolgt. Durch eine entsprechende Drehbewegung der von Außen beispielsweise mittels eines Seilzugs betätigbaren Steuereinrichtung 8, die sich vorzugsweise von einem antriebsseitigen Endbereich bis zur Abtriebswahleinrichtung 27 erstreckt, wird die Abtriebswahlreinrichtung 27 in Längsrichtung der feststehenden Welle 1 betätigt, was durch einen Pfeil A1 in der Figur 1 angedeutet ist.

Nachfolgend wird unter Bezugnahme auf die Figuren 7 bis 14 die Wirkweise des Kupplungsmechanismus beschrieben.

Die Figuren 7 bis 10 zeigen schematisch die in den Kupplungsmechanismus involvierten Teile ausgehend von einer Antriebsmomentübertragung bezüglich des ersten Ganges hin zu einer Bremsmomentübertragung. Die Figuren 7 bis 10 sind Querschnitte entlang einer Linie A-A in Figur 1.

Die Figur 7 zeigt den Kupplungsmechanismus im Zustand einer Antriebsmomentübertragung bezüglich des ersten Gangs. Der antreibende abtriebsseitige Teil 4b des Planetenradträgers 4a, 4b dreht sich in Richtung des Pfeils A. Die steilen Flächen der Antriebsklinken DP stehen mit dem zweiten Zahnkranz 12b des Kopplungselements 60 in Eingriff, während die Bremsklinken BP mit ihren abgeflachten Flächen über den zweiten Zahnkranz 12b des Kopplungselements 60 gleiten, das heißt, die Antriebsklinken DP sind aktiv und die Bremsklinken BP sind nicht aktiv. Der Haken 41 der Ringfeder 40 steht mit einer linken Wand der Aussparung 42 in Eingriff. Somit dreht sich die Ringfeder 40, wobei sie sich zu dem Hohlrad 10 hin ausweitet bzw. zu dem Hohlrad 10 hin expandiert ist. Das Hohlrad 10 dreht sich mittels Reibung bzw. mittels eines Reibmoments, das zwischen dem Hohlrad 10 und der Ringfeder 40 aufgebaut wird. Die Vorsprünge 31 des ersten Zahnkranzes 12a des Kopplungselements 60 befinden sich linksbündig in den Aussparungen 30 des ersten Zahnkranzes 11a des Hohlrades 10. Da die Vorsprünge 31 des ersten Zahnkranzes 12a des Kopplungselements 60 in Umfangsrichtung kleiner als die Aussparungen 30 des ersten Zahnkranzes 11a des Hohlrades 10 sind, ergibt sich jeweils ein Zwischenraum d1 zwischen diesen.

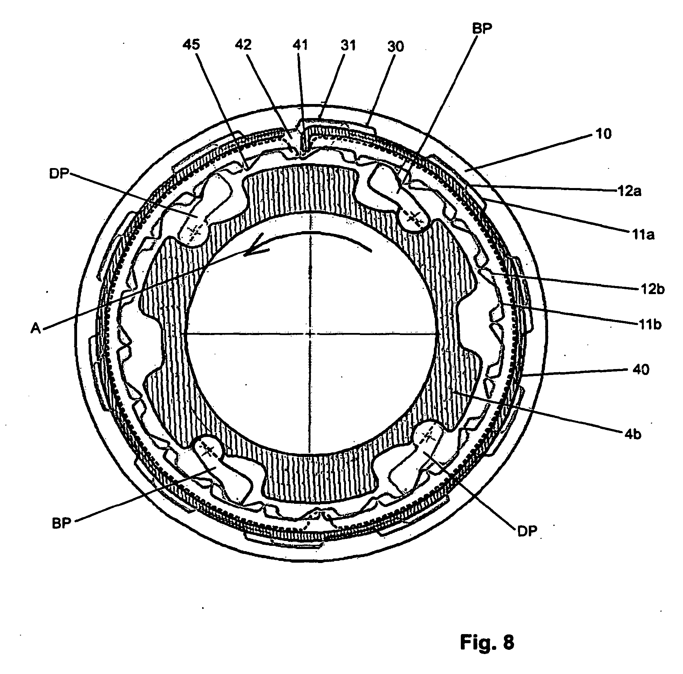

Die Figur 8 zeigt den Kupplungsmechanismus, wobei von einem Zustand einer Antriebsmomentübertragung bezüglich des ersten Gangs, also ausgehend von der Figur 7, von einem Fahrer ein Bremsmoment aufgebracht wird. Der antreibende abtriebsseitige Teil 4b des Planetenradträgers 4a, 4b dreht sich nun in eine bezüglich der Antriebsrichtung entgegengesetzte Bremsrichtung, wie dies durch den Pfeil A angedeutet ist. Die Antriebsklinken DP gelangen mit dem zweiten Zahnkranz 12b des Kopplungselements 60 außer Eingriff. Der Haken 41 der Ringfeder 40 gelangt mit einer rechten Wand der Aussparung 42 in Eingriff. Die Ringfeder 40 dreht sich zusammen mit dem abtriebsseitigen Teil 4b des Planetenradträgers 4a, 4b. Da sich die Ringfeder 40 zusammenzieht bzw. kontrahiert, wird die Reibung bzw. das Reibmoment zwischen der Ringfeder 40 und dem Hohlrad 10 verringert. Jedoch ist die Reibung noch ausreichend, um das Hohlrad 10 zu drehen. In diesem Zustand befinden sich die Bremsklinken BP noch nicht in einem Bremsmomentübertragungseingriff.

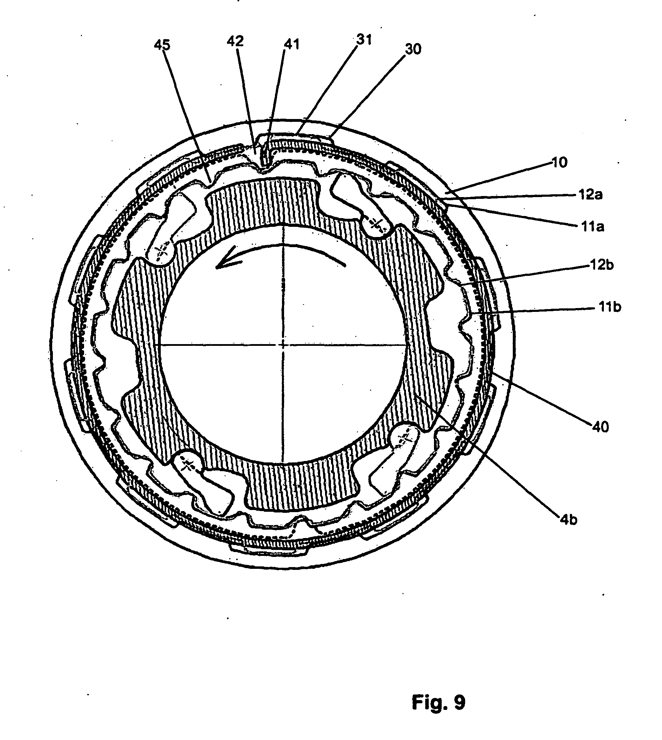

Die Figur 9 zeigt den Kupplungsmechanismus in einem Zustand, der dem in der Figur 8 gezeigten Zustand folgt. Das Hohlrad 10 dreht sich mittels Reibung zwischen der Ringfeder 40 und dem Hohlrad 10 relativ zu dem Kopplungselement 60. Die Vorsprünge 31 des Kopplungselements 60 befinden sich in den Aussparungen 30 der ersten Zahnkranzanordnung 11 a in einer Zwischenposition, das heißt, stehen nicht mit Wänden der Aussparungen 30 in Kontakt.

Die Figur 10 zeigt den Kupplungsmechanismus in einem Zustand, der dem in der Figur 9 gezeigten Zustand folgt. Da sich das Hohlrad 10 und somit sein zweiter Zahnkranz 11b der Zahnkranzanordnung 11a, 11b relativ zu dem Kopplungselement 60 bzw. dem zweiten Zahnkranz 12b des Kopplungselements 60 gedreht und ausgerichtet hat, können die Bremsklinken BP nun mit dem zweiten Zahnkranz 12b des Kopplungselements 60 in Eingriff gelangen, während die Antriebsklinken DP mit ihren abgeflachten Flächen über den zweiten Zahnkranz 12b des Kopplungselements 60 gleiten, das heißt, die Bremsklinken sind aktiv und die Antriebsklinken sind nicht aktiv. Die Vorsprünge 31 des ersten Zahnkranzes 12a des Kopplungselements 60 befinden sich nun rechtsbündig in den Aussparungen 30. Da die Vorsprünge 31 in Umfangsrichtung kleiner als die Aussparungen 30 sind, ergibt sich jeweils ein Zwischenraum d2, der in seiner Größenordnung d1 entspricht.

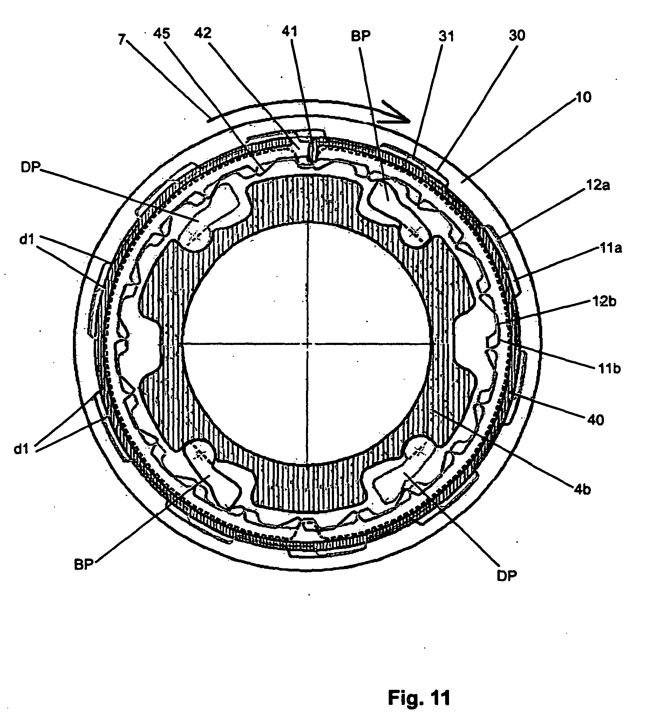

Die Figuren 11 bis 14 zeigen schematisch die in den Kupplungsmechanismus involvierten Teile ausgehend von einer Antriebsmomentübertragung bezüglich des zweiten, dritten vierten oder fünften Gangs hin zu einer Bremsmomentübertragung. Die Figuren 11 bis 14 sind Querschnitte entlang der Linie A-A in Figur 1.

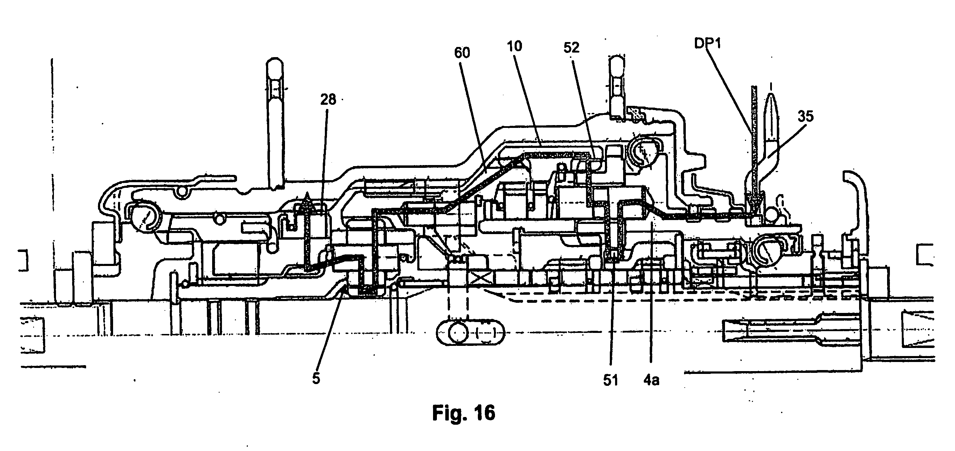

Die Figur 11 zeigt den Kupplungsmechanismus im Zustand einer Antriebsmomentübertragung. Dieser Zustand entspricht der Antriebsmomentübertragung des zweiten, dritten, vierten oder fünften Gangs. Das antreibende Hohlrad 10 dreht sich in Richtung des Pfeils A und zwar schneller als der abtriebsseitige Teil 4b des Planetenradträgers 4a, 4b. Wie in der Figur 1 durch den Pfad P2 oder wie in den Figuren 16 bis 19 gezeigt, gelangt das Antriebsmoment bezüglich der Gangstufen zwei bis fünf von dem Antriebsteil 2 bzw. dem antriebsseitigen Teil 4a des Planetenradträgers 4a, 4b über das erste Planetengetriebe 4 anhand der zweiten Planetenräder 52 auf das Hohlrad 10. Der erste Zahnkranz 11a der Zahnkranzanordnung 11a, 11b des Hohlrades 10 steht linksbündig mit dem ersten Zahnkranz 12a des Kopplungselements 60 in Antriebsmomentübertragungseingriff. Da, wie bereits erwähnt, die Vorsprünge 31 des ersten Zahnkranzes 12a des Kopplungselements 60 in Umfangsrichtung kleiner als die Aussparungen 30 des ersten Zahnkranzes 11a des Hohlrades 10 sind, ergibt sich auch hier ein Zwischenraum d1. Der Haken 41 der Ringfeder 40 steht dabei mit der rechten Wand der Aussparung 42 in Eingriff. Weder die Antriebsklinken DP noch die Bremsklinken BP gelangen mit dem zweiten Zahnkranz 12b des Kopplungselements 60 in Momentübertragungsverbindung, das heißt, sowohl die Antriebsklinken DP als auch die Bremsklinken BP sind nicht aktiv.

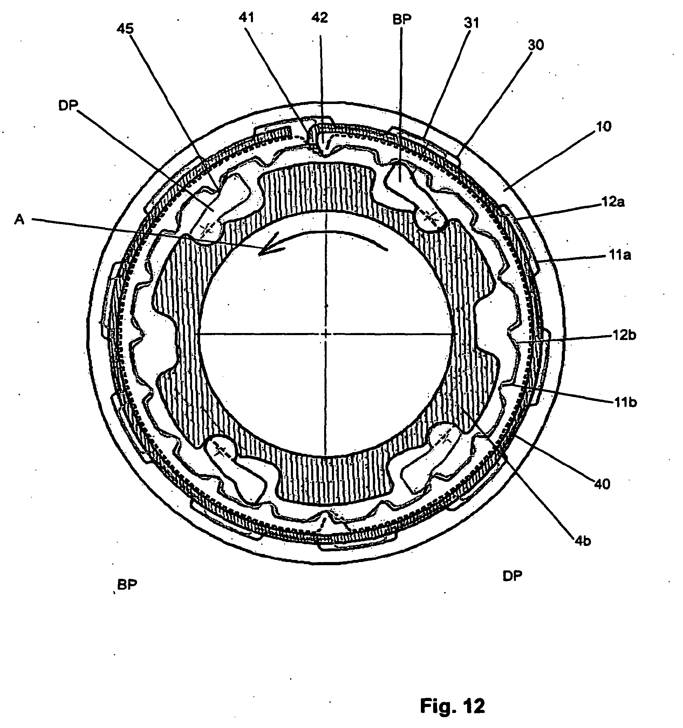

Die Figur 12 zeigt den Kupplungsmechanismus, wobei von einem Zustand einer Antriebsmomentübertragung bezüglich des zweiten, dritten, vierten oder fünften Gangs, also ausgehend von der Figur 11, von einem Fahrer ein Bremsmoment aufgebracht wird. Der antreibende abtriebsseitige Teil 4b des Planetenradträgers 4a, 4b wird in die Bremsrichtung gedreht, die durch den Pfeil A angedeutet ist. Das Hohlrad 10 dreht sich schneller als der abtriebsseitige Teil 4b des Planetenradträgers 4a, 4b. Der Haken 41 der Ringfeder 40 gelangt mit der linken Wand der Aussparung 42 in Eingriff, da sich der abtriebsseitige Teil 4b des Planetenradträgers 4a, 4b bezüglich der Figur 12 im Gegenuhrzeigersinn dreht. Nun dreht sich die Ringfeder 40 mit dem abtriebsseitigen Teil 4b des Planetenradträgers 4a, 4b. Da sich die Ringfeder 40 zusammenzieht bzw. kontrahiert, verringert sich die Reibung bzw. das Reibmoment zwischen der Ringfeder 40 und dem Hohlrad 10. Jedoch ist die Reibung ausreichend, um das Hohlrad 10 zu drehen. Die Vorsprünge 31 des ersten Zahnkranzes 12a des Kopplungselements 60 gelangen in den Aussparungen 30 des ersten Zahnkranzes 11 a der Zahnkranzanordnung 11a, 11b des Hohlrades 10 in eine Zwischenposition, das heißt, stehen nicht mehr mit Wänden der Aussparung 30 in Kontakt. In diesem Zustand stehen weder die Antriebsklinken DP noch die Bremsklinken BP mit der zweiten Zahnkranzanordnung 12b des Kopplungselements 60 in Momentübertragungseingriff.

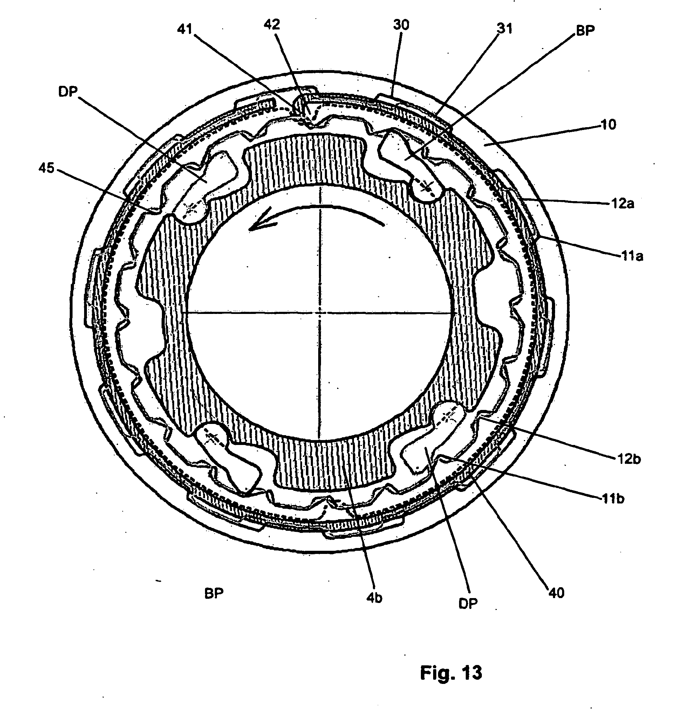

Die Figur 13 zeigt den Kupplungsmechanismus in einem Zustand, der dem in der Figur 12 gezeigten Zustand folgt. Das Hohlrad 10 dreht sich im Gegenuhrzeigersinn relativ zu dem Kopplungselement 60 mittels Reibung zwischen der Ringfeder 40 und dem Hohlrad 10. Die Bremsklinken BP beginnen, mit dem zweiten Zahnkranz 12b des Kopplungselements 60 in Eingriff zu gelangen. Die Antriebsklinken DP gleiten mit ihren abgeflachten Flächen über den zweiten Zahnkranz 12b des Kopplungselements 60, ohne mit diesem eine Antriebsmomentübertragung einzugehen. Die Vorsprünge 31 des Kopplungselements 60 befinden sich immer noch in einer Zwischenposition in den Aussparungen 30 des Hohlrades 10.

Die Figur 14 zeigt den Kupplungsmechanismus in einem Zustand, der dem in der Figur 13 gezeigten Zustand folgt. Da sich das Hohlrad 10 schneller dreht als der abtriebsseitige Teil 4b des Planetenradträgers 4a, 4b gelangen nun die Vorsprünge 31 des Kopplungselements 60 mit den rechten Wänden der Aussparungen 30 des Hohlrades in Kontakt. Das Hohlrad 10 dreht sich mit der Ringfeder 40. Das Hohlrad 10 dreht sich relativ zu dem Kopplungselement 60 und somit dreht sich der zweite Zahnkranz 11b der Zahnkranzanordnung 11a, 11b des Hohlrads 10 relativ zu dem zweiten Zahnkranz 12b des Kopplungselements 60. Die Bremsklinken BP stehen nun mit dem zweiten Zahnkranz 12b des Kopplungselements 60 so in Eingriff, dass das Bremsmoment mittels des Kopplungselements 60 weitergeleitet werden kann. Die Antriebsklinken DP gleiten über den zweiten Zahnkranz 12b des Kopplungselements 60, ohne mit diesem einen Momentübertragungseingriff einzugehen.

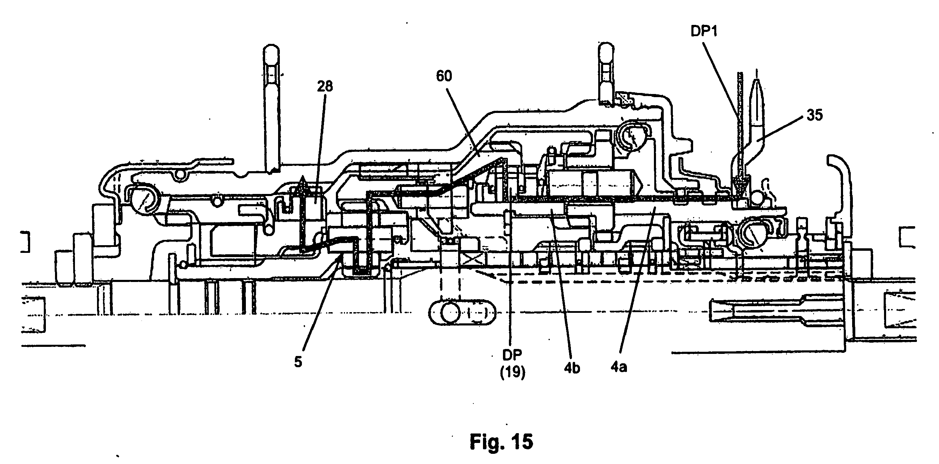

Wie dies in den Figuren 15 bis 19 gezeigt ist, wird das von dem Antriebsteil 2 bzw. dem antriebsseitigen Teil 4a des Planetenradträgers 4a, 4b des ersten Planetengetriebes 4 eingeleitete Antriebsmoment über unterschiedliche Pfade zur Nabenhülse 3 hin übertragen. In den Figuren 15 bis 19 sind jeweils lediglich wesentliche Bauteile mit Bezugszeichen versehen.

Ein Pfad DP1 in der Figur 15 stellt den Übertragungsweg des Antriebsmoments bezüglich des ersten Gangs vom Kettenrad 35 über die Getriebeanordnung zur Nabenhülse 3 dar.

Ein Pfad DP2 in der Figur 16 stellt den Übertragungsweg des Antriebsmoments bezüglich des zweiten Gangs vom Kettenrad 35 über die Getriebeanordnung zur Nabenhülse 3 dar.

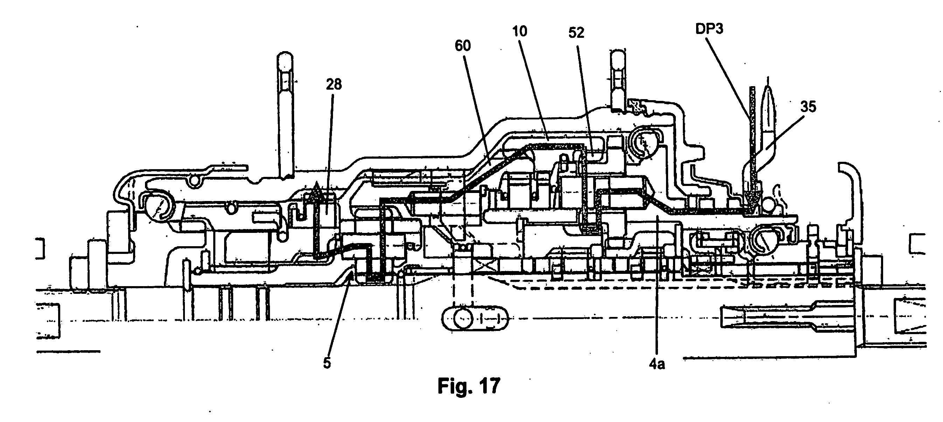

Ein Pfad DP3 in der Figur 17 stellt den Übertragungsweg des Antriebsmoments bezüglich des dritten Gangs vom Kettenrad 35 über die Getriebeanordnung zur Nabenhülse 3 dar.

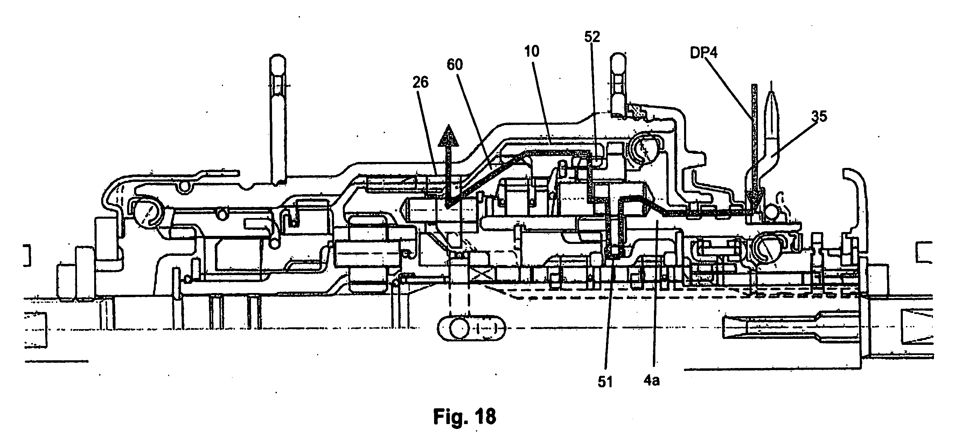

Ein Pfad DP4 in der Figur 18 stellt den Übertragungsweg des Antriebsmoments bezüglich des vierten Gangs vom Kettenrad 35 über die Getriebeanordnung zur Nabenhülse 3 dar.

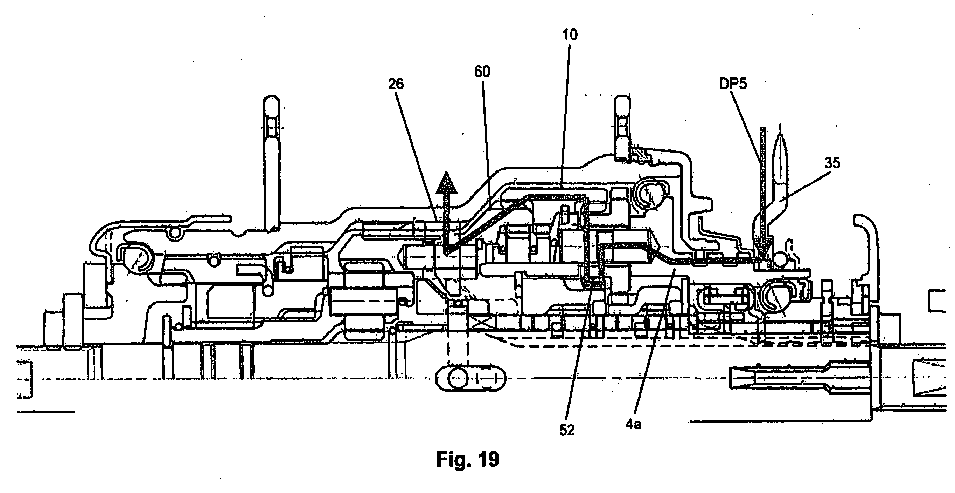

Ein Pfad DP5 in der Figur 19 stellt den Übertragungsweg des Antriebsmoments bezüglich des fünften Gangs vom Kettenrad 35 über die Getriebeanordnung zur Nabenhülse 3 dar.

In der nachfolgenden Tabelle 1 ist mit dem Zeichen "-" ein Zustand bezeichnet, bei dem die Kupplungen nicht in Betriebsstellung sind, das heißt, kein Antriebsmoment übertragen. Mit dem Zeichen "0" ist ein Zustand bezeichnet, bei dem die Kupplungen in Betriebsstellung sind, das heißt, ein Antriebsmoment übertragen. Wie anhand der Figuren 15 bis 19 in Verbindung mit den Pfaden DP 1 bis DP5 ersichtlich ist, überträgt die zweite Abtriebskupplung 28 immer dann ein Antriebsmoment, wenn das Antriebsmoment einen Pfad über das zweite Planetengetriebe 5 nimmt. Das Zeichen "X" bezeichnet einen Zustand, bei dem die zweite Abtriebskupplung 28 das Antriebsmoment überträgt, wohingegen das Zeichen "n" einen Zustand bezeichnet, bei dem die zweite Abtriebskupplung 28 kein Antriebsmoment überträgt.

**Tabelle 1**

| Kupplung / Gang | 21 | 22 | Antriebsklinken DP (19) | 26 | 28 |
|---|---|---|---|---|---|
| 1 | - | - | 0 | - | X |
| 2 | 0 | - | - | - | X |
| 3 | - | 0 | - | - | X |
| 4 | 0 | - | - | 0 | n |
| 5 | - | 0 | - | 0 | n |

Der Kupplungsmechanismus ermöglicht es, dass unabhängig von der gewählten Gangstufe das Bremsmoment immer über den gleichen Pfad P1 bzw. BP1 zu dem Bremsmechanismus 8 hin übertragen wird. Die resultierende Bremswirkung wird also nicht von der Gangstufe beeinflusst, von welcher aus der Fahrer ein Bremsmoment aufbringt. Folglich ist der Bremsvorgang für den Fahrer komfortabler und zugleich sicherer.

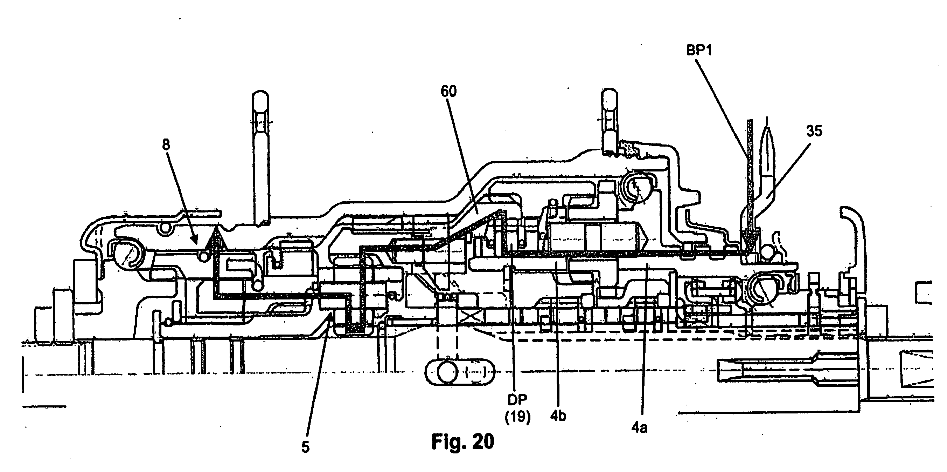

Der gesamte Bremsmomentübertragungspfad BP1 vom Kettenrad 35 zum Bremsmechanismus 8 ist in der Figur 20 gezeigt. Im vorliegenden Ausführungsbeispiel entspricht der Bremsmomentübertragungspfad BP 1 im Wesentlichen dem Momentübertragungspfad der ersten Gangstufe, führt jedoch nicht über die zweite Abtriebskupplung 28 zur Nabenhülse 3, sondern über den Bremsmechanismus 8.

Der vorstehend beschriebene Aufbau ermöglicht des Weiteren, dass das erste Planetengetriebe 4 und das zweite Planetengetriebe 5 bzw. der mit dem Planetengetriebe 5 in Wirkverbindung stehende Kupplungsmechanismus so miteinander gekoppelt werden, dass eine permanente Synchronisation zwischen diesen beiden erzielt wird. Folglich ist der Gangwechsel für einen Fahrer angenehmer, wodurch gleichzeitig das Fahrgefühl während des Gangwechsels verbessert wird. Vorteilhaft ist auch, dass das zweite Planetengetriebe 5 nicht aufwendig mittels einer Mechanik gesteuert werden muss, die üblicherweise aus anhand einer Steuereinrichtung gesteuerten Sonnenradkupplungen oder einer antriebsseitig von diesem Planetengetriebe befindlichen komplizierten Kupplungsmechanik besteht. Dies alles ist möglich, obwohl der beschriebene Aufbau einfach, kompakt, schlank und trotzdem zuverlässig im Betrieb ist.

Während lediglich eine bevorzugte Ausführungsform der vorliegenden Erfindung beschrieben und dargestellt worden ist, wird es für Fachleute in Kenntnis dieser Offenbarung ersichtlich sein, dass verschiedene Modifikationen, Änderungen, Verbesserungen und Variationen gemacht werden können, ohne vom Schutzumfang dieser Erfindung, wie dieser in den Ansprüchen definiert, abzuweichen.

Das vorstehend beschriebene Ausführungsbeispiel umfasst zwei Planetengetriebe. Fachleuten dürfte es jedoch ersichtlich sein, dass die Erfindung nicht auf zwei Planetengetriebe beschränkt ist, sondern auch auf drei oder mehr Planetengetriebe angewendet werden kann. Des Weiteren ist die Erfindung nicht auf ein erstes zweistufiges und ein zweites einstufiges Planetengetriebe beschränkt. Vielmehr können die Anzahl, die Stufigkeit sowie die Positionierung der Planetengetriebe den jeweiligen Erfordernissen, wie beispielsweise der Anzahl der Gangstufen, Übersetzungs-/ Untersetzungsgetriebe, etc., angepasst werden. Folglich kann der Bremsmomentpfad auch ein anderer als der der ersten Gangstufe sein. Außerdem können die als vorzugsweise einstückig beschriebenen Bauteile auch mehrteilig ausgeführt werden, wenn dies erforderlich sein sollte.

## Patentansprüche

1. Getriebeanordnung für eine Mehrgangnabe mit Rücktrittbremsmechanismus, insbesondere für ein Fahrrad, aufweisend:
ein erstes Planetengetriebe (4) und zumindest ein zweites Planetengetriebe (5), die miteinander gekoppelt werden können;
einen Bremsmechanismus (8), der auf der Seite angeordnet ist, die bezüglich des ersten Planetengetriebes (4) entgegengesetzt zur Seite eines Antriebsteils (2) ist und
einen Kupplungsmechanismus, der zumindest zwei gegenläufig aktive Klinken (DP, PB) umfasst, wobei der Kupplungsmechanismus abtriebsseitig mit dem ersten Planetengetriebe (4) koppelbar ist und dazu geeignet ist, entweder ein vom Fahrer in Antriebsrichtung aufgebrachtes Antriebsmoment in Abhängigkeit eines gewählten Ganges zu übertragen und weiterzuleiten, oder ein vom Fahrer in Bremsrichtung aufgebrachtes Bremsmoment unabhängig vom gewählten Gang über einen Pfad (BP1) zu übertragen und zu dem Bremsmechanismus (8) weiterzuleiten,
**dadurch gekennzeichnet, dass**
die gegenläufig aktiven Klinken (DP, PB) an einem Planetenradträger (4a, 4b) des ersten Planetengetriebes (4) bereitgestellt sind.

2. Getriebeanordnung gemäß Anspruch 1, wobei der Kupplungsmechanismus ein Hohlrad (10) mit einem antriebsseitigen Zahnkranz (9), der dazu geeignet ist, mit zumindest einem Planetenrad (52) des ersten Planetengetriebes (4) in Eingriff zu treten, und mit einer abtriebsseitigen in axialer Richtung versetzten Zahnkranzanordnung (11a, 11b) umfasst.

3. Getriebeanordnung gemäß Anspruch 1 oder 2, wobei der Kupplungsmechanismus ein Kopplungselement (60) umfasst, das in Wirkverbindung mit dem zweiten Planetengetriebe (5) stehen kann und antriebsseitig einen ersten Zahnkranz (12a) und einen zweiten Zahnkranz (12b) aufweist, wobei der erste Zahnkranz (12a) dazu geeignet ist, mit einem ersten Zahnkranz (11a) der Zahnkranzanordnung (11a, 11b) des Hohlrades (10) in Eingriff zu treten.

4. Getriebeanordnung gemäß einem der vorherigen Ansprüche, wobei der Kupplungsmechanismus einen abtriebsseitigen Teil (4b) eines Planetenradträgers (4a, 4b) des ersten Planetengetriebes (4) umfasst, der mittels zumindest einer Antriebsklinke (DP) und/oder zumindest einer Bremsklinke (BP) selektiv mit dem zweiten Zahnkranz (12b) des Kopplungselements (60) in Momentübertragungsverbindung treten kann.

5. Getriebeanordnung gemäß einem der vorherigen Ansprüche, wobei die zumindest eine Antriebsklinke (DP) und die zumindest eine Bremsklinke (BP) in jeweiligen peripheren Aussparungen am abtriebsseitigen Teil (4b) des Planetenradträgers (4a, 4b) des ersten Planetengetriebes (4) gegenläufig bereitgestellt sind, und in radialer Richtung zu dem zweiten Zahnkranz (12b) des Kopplungselements hin gespannt sind.

6. Getriebeanordnung gemäß einem der vorherigen Ansprüche, wobei der abtriebsseitige Teil (4b) des Planetenradträgers (4a, 4b) des ersten Planetengetriebes (4) mittels einer Ringfeder (40) mit dem Hohlrad (10) in Umfangsrichtung in Wirkverbindung treten kann.

7. Getriebeanordnung gemäß einem der vorherigen Ansprüche, wobei der antriebsseitige Teil (4a) des Planetenradträges (4a, 4b) des ersten Planetengetriebes (4) dazu geeignet ist, als Antriebsteil (2) zu wirken.

8. Getriebeanordnung gemäß einem der vorherigen Ansprüche, wobei Vertiefungen (30) des ersten Zahnkranzes (11a) der Zahnkranzanordnung (11a, 11 b) des Hohlrades (10) in Umfangsrichtung größer sind als in diese Vertiefungen (30) eingreifende Vorsprünge (31) des ersten Zahnkranzes (12a) des Kopplungselements (60), so dass sich ein Zwischenraum (d1) ergibt.

9. Getriebeanordnung gemäß einem der vorherigen Ansprüche, wobei das Hohlrad (10) dazu geeignet ist, sich in Abhängigkeit einer Drehrichtung mit dem Kopplungselement (60) relativ auszurichten.

10. Getriebeanordnung gemäß einem der vorherigen Ansprüche, wobei der zweite Zahnkranz (11b) der Zahnkranzanordnung (11a, 11b) des Hohlrads (10) Vorsprünge (45) umfasst, die dazu geeignet sind, die zumindest eine Bremsklinke (BP) zu deaktivieren und die so angeordnet, angepasst und ausrichtbar sind, dass die zumindest eine Bremsklinke (BP) bei einer Antriebsmomentübertragung über den Pfad P2 davon abgehalten wird, in Momentübertragungsverbindung mit dem zweiten Zahnkranz (12b) des Kopplungselements (60) zu gelangen, wobei ein Eingriff der zumindest einen Bremsklinke (BP) mit dem zweiten Zahnkranz (12b) des Kopplungselements (60) während einer Bremsmomentübertragung möglich ist.

11. Getriebeanordnung gemäß einem der vorherigen Ansprüche, wobei die Vorsprünge (45) zum Deaktivieren der zumindest einen Bremsklinke (BP) so angeordnet, angepasst und ausrichtbar sind, dass bei einer Antriebs- oder Bremsmomentübertragung über den Pfad P1 die zumindest eine Antriebsklinke (DP) und/oder die zumindest eine Bremsklinke (BP) mit dem zweiten Zahnkranz (12b) des Kopplungselements (60) in Eingriff gelangen kann.

12. Getriebeanordnung gemäß einem der vorherigen Ansprüche, wobei die Ringfeder (40) mittels eines Hakens (41), der mit Spiel in einer peripheren Ausnehmung (42) am abtriebsseitigen Teil (4b) des Planetenradträgers (4a, 4b) des ersten Planetengetriebes (4) angeordnet ist, mit dieser Ausnehmung (42) wechselseitig in Eingriff steht.

13. Getriebeanordnung gemäß einem der vorherigen Ansprüche, wobei die Ringfeder(40) in einer inneren Umfangsnut des Hohlrads (10) eingesetzt ist.

14. Getriebeanordnung gemäß einem der vorherigen Ansprüche, wobei eine Abtriebswahleinrichtung (27) vorgesehen ist, die mittels einer Steuereinrichtung (8) längsverschieblich betätigbar ist, so dass der Abtrieb zu einer Nabenhülse (3) entweder über eine erste Abtriebskupplung (26) oder über eine zweite Abtriebskupplung (28) erfolgt.

15. Getriebeanordnung gemäß einem der vorherigen Ansprüche, wobei Bremsteile (82) mit dem Rollengehäuse (81) verbunden sind und im Bremsbetrieb radial nach Außen gedrückt werden.

16. Getriebeanordnung gemäß einem der vorherigen Ansprüche, wobei zumindest eine mittels der Steuereinrichtung (8) steuerbare Sonnenradkupplung (21, 22) zwischen zumindest einem Sonnenrad (23, 24) des ersten Planetengetriebes (4) und einer feststehenden Welle (1) angeordnet ist.

17. Getriebeanordnung gemäß einem der vorherigen Ansprüche, wobei das Kopplungselement (60) dazu geeignet ist, zwei Planetengetriebe (4, 5) so zu koppeln, dass eine permanente Synchronisation zwischen den Planetengetrieben (4, 5) erreicht wird.

18. Getriebeanordnung gemäß einem der vorherigen Ansprüche, wobei die Steuereinrichtung (8) so betätigbar ist, dass sich durch Ansteuerung der zumindest einen Sonnenradkupplung (21, 22) und der Abtriebswahleinrichtung (27) eine Vielzahl von Gängen ergibt.

19. Getriebeanordnung gemäß einem der vorherigen Ansprüche, wobei das erste Planetengetriebe (4) zweistufig und das zweite Planetengetriebe (5) einstufig ausgebildet ist, so dass sich ein Fünfganggetriebe ergibt.

20. Getriebeanordnung gemäß einem der vorherigen Ansprüche, wobei der eine Bremsmomentübertragungspfad (BP1) im Wesentlichen dem Übertragungspfad des ersten Ganges (DP1) entspricht, jedoch nicht über die zweite Abtriebskupplung (28), sondern über den Bremsmechanismus (8) zum Nabengehäuse (3) führt.

## Claims

1. Gearbox for a multi-speed hub with a back pedal brake mechanism, in particular for a bicycle, comprising:
a first planetary gearing (4) and at least a second planetary gearing (5) which can be coupled with each other;
a braking mechanism (8) arranged on the side opposite to a driver part (2) with respect to the first planetary gearing (4); and
a clutch mechanism having at least two counter-rotating driving pawls, said clutch mechanism being coupleable to the first planetary gearing (4) on the output side, and adapted to either transmit and forward a driving torque applied by a rider in a driving direction depending on a selected gear ratio or transmit a braking torque applied by the rider to the braking mechanism (8) in a braking direction independent of the selected gear ratio via a path (BP1) and forward this to the braking mechanism (8)
**characterised in that**
the active counter-rotating driving pawls (DP, PB) are provided on a planetary gear carrier (4a, 4b) of the first planetary gearing (4).

2. Gearbox according to claim 1, wherein the clutch mechanism comprises a ring gear (10) with a toothed ring (9) that is arranged on the driving side and adapted to engage at least one planet gear (52) of the first planetary gearing (4), and a toothed ring arrangement (11a, 11b) that is arranged on the output side and offset in an axial direction.

3. Gearbox according to claim 1 or 2, wherein the clutch mechanism comprises a linking member (60) that is operatively connectable with the second planetary gearing (5) and includes a first toothed ring (12a) and a second toothed ring (12b) on the driving side, wherein the first toothed ring (12a) is adapted to engage with a first toothed ring (11a) of the toothed ring arrangement (11a, 11b) of the ring gear (10).

4. Gearbox according to any one of the preceding claims, wherein the clutch mechanism comprises an output-side part (4b) of a planet gear carrier (4a, 4b) of the first planetary gearing (4) which can be selectively connected in a torque transferring manner to the second toothed ring (12b) of the linking member (60) by means of at least one driving pawl (DP) and/or at least one braking pawl (BP).

5. Gearbox according to any one of the preceding claims, wherein the at least one driving pawl (DP) and the at least one braking pawl (BP) are provided in a counter-rotating manner in respective peripheral recesses at the output-side part (4b) of the planet gear carrier (4a, 4b) of the first planetary gearing (4) and biased in radial direction to the second toothed ring (12b) of the linking member (60).

6. Hub gearbox according to any one of the preceding claims, wherein the output-side part (4b) of the planet gear carrier (4a, 4b) of the first planetary gearing (4) is operatively connectable in circumferential direction to the ring gear (10) by means of a ring spring (40).

7. Gearbox according to any one of the preceding claims, wherein the driving-side part (4a) of the planet gear carrier (4a, 4b) of the first planetary gearing (4) is adapted to serve as a driver (2).

8. Gearbox according to any one of the preceding claims, wherein recesses (30) of the toothed ring (11a) of the toothed ring arrangement (11a, 11b) of the ring gear (10) are in a circumferential direction larger than projections (31) of the first toothed ring (12a) of the linking member (60) engaging the recesses (30) such that an intermediate space (d1) is created.

9. Gearbox according to any one of the preceding claims, wherein the ring gear (10) is adapted, depending on a rotation direction, to align relatively to the linking member (60).

10. Gearbox according to any one of the preceding claims, wherein the second toothed ring (11b) of the toothed ring arrangement (11a, 11b) of the ring gear (10) comprises
projections (45) adapted to deactivate the at least one braking pawl (BP) and arranged, adapted and alignable in such a manner that the at least one braking pawl (BP) is prevented from a torque transferring engagement with the second toothed ring (12b) of the linking member (60) during a driving torque transmission over path P2, wherein an engagement of the at least one braking pawl (BP) with the second toothed ring (12b) of the linking member (60) is allowable during a braking torque transmission.

11. Gearbox according to any one of the preceding claims, wherein the projections (45) for deactivating the at least one braking pawl (PB) are arranged, adapted and alignable in such a manner that, during a driving or braking torque transmission over path P1, the at least one driving pawl (DP) and/or the at least one braking pawl (BP) are able to engage the second toothed ring (12b) of the linking member (60).

12. Gearbox according to any one of the preceding claims, wherein the ring spring (40) by means of a hook (41) which is arranged with play in a peripheral cavity (42) of the first planetary gearing is mutually engaged with this peripheral cavity (42).

13. Gearbox according to any one of the preceding claims, wherein the ring spring (40) is inserted in an inner circumferential groove of the ring gear (10).

14. Gearbox according to any one of the preceding claims, wherein an output selector (27) is provided which can be actuated in a longitudinally displacable manner by means of control means (8) such that the output to the hub sleeve (3) takes place either via the first output clutch (26) or via a second output clutch (28).

15. Gearbox according to any one of the preceding claims, wherein braking parts (82) are connected to a roller case (81) and are pushed radially outward during braking operation.

16. Gearbox according to any one of the preceding claims, wherein at least one sun gear clutch (21, 22) actuatable by means of the control means (8) is arranged between at least one sun gear (23, 24) of the first planetary gearing (4) and a fixed shaft (1).

17. Gearbox according to any one of the preceding claims, wherein the linking member (60) is adapted to couple the planetary gearings (4, 5) such that a permanent synchronisation between the planetary gearings (4, 5) is achieved.

18. Gearbox according to any one of the preceding claims, wherein the control means (8) is actuatable such that via controlling the at least one sun gear clutch (21, 22) and the output selector means (27) a plurality of gear ratios are provided.

19. Gearbox according to any one of the preceding claims, wherein the first planetary gearing (4) has two stages and the second planetary gearing (5) has one stage such that a five-speed gearing is provided.

20. Hub gearbox according to any one of the preceding claims, wherein the one braking torque transmission path (BP1) substantially corresponds to the transmission path of the first gear ratio (DP1), however leads via the braking mechanism (8) and not via the second output clutch (28) to the hub shell (3).

## Revendications

1. Agencement d'engrenages pour un moyeu a multiple vitesses avec mécanisme de freinage à contrepédalage, en particulier pour une bicyclette, comprenant :
un premier train planétaire (4) et au moins un deuxième train planétaire (5), qui peuvent être couplés l'un à l'autre,
un mécanisme de freinage (8), qui est agencé sur le côté qui est opposé au côté d'une partie d'entraînement (2) par rapport au premier train planétaire (4) et
un mécanisme de couplage, qui comprend au moins deux cliquets actifs en directions opposés (DP, PB), le mécanisme de couplage pouvant être couplé, du coté sorti, au premier train planétaire (4), et étant susceptible, soit de transmettre et d'acheminer un couple d'entraînement fourni par le conducteur dans la direction d'entraînement en fonction d'une vitesse choisie, soit de transmettre et de répercuter au mécanisme de freinage (8) un couple de freinage fourni par le conducteur en direction du freinage, indépendamment de la vitesse choisie, sur un chemin (BP1),
**caractérisé en ce que**
les cliquets actifs en directions opposés (DP, BP) sont positionnés sur un support de roue planétaire (4a,4b) du premier train planétaire (4).

2. Agencement d'engrenages selon la revendication 1, dans lequel le mécanisme de couplage comprend une couronne (10) avec une roue dentée (9) du côté entraînement, qui est susceptible de s'engrener avec au moins une roue planétaire (52) du premier train planétaire (4), et avec un agencement de roue dentée (11a, 11b) du côté sorti, déplacé dans une direction axiale.

3. Agencement d'engrenages selon la revendication 1 ou 2, dans le quel le mécanisme de couplage comprend un élément de couplage (60), qui peut rester en liaison active avec le deuxième train planétaire (5), et qui comporte une première roue dentée (12a) et une deuxième roue dentée (12b) du côté entrainement, la première roue dentée (12a) étant susceptible de s'engrener avec une première roue dentée (11a) de l'agencement de roues dentées (11a, 11b) de la couronne (10).

4. Agencement d'engrenages selon l'une quelconque des revendications précédentes, dans lequel le mécanisme de couplage comprend une partie du côté sorti (4b) d'un support de roue planétaire (4a, 4b) du premier train planétaire (4), qui peut communiquer la transmission d'un couple sélectivement à la deuxième roue dentée (12b) de l'élément de couplage (60) au moyen d'au moins un cliquet d'entraînement (DP) et/ou d'au moins un cliquet de freinage (BP).

5. Agencement d'engrenages selon l'une quelconque des revendications précédentes, dans lequel le au moins un cliquet d'entraînement (DP), et le au moins un cliquet de freinage (BP) sont disposés en directions opposés dans des évidements périphériques respectifs sur la partie du côté sorti (4b) du support de roue planétaire (4a, 4b) du premier train planétaire (4), et sont sollicités dans une direction radiale par rapport à la deuxième roue dentée (12b) de l'élément de couplage.

6. Agencement d'engrenages selon l'une quelconque des revendications précédentes, dans lequel la partie du côté sorti (4b) du support de roue planétaire (4a, 4b) du premier train planétaire (4) peut être mise en liaison de couplage dans la direction périphérique avec la couronne (10) au moyen d'un ressort bague (40).

7. Agencement d'engrenages selon l'une quelconque des revendications précédentes, dans lequel la partie (4a) du côté entraînement du support de roue planétaire (4a, 4b) du premier train planétaire (4) est susceptible d'agir comme partie d'entraînement (2).

8. Agencement d'engrenages selon l'une quelconque des revendications précédentes, dans lequel des creux (30) de la première roue dentée (11a) de l'agencement de roues dentées (11a, 11b) de la couronne (10) sont supérieurs en direction périphérique aux saillies (31) de la première roue dentée (12a) de l'élément de couplage (60) avançant dans ces creux (30), de sorte que se crée un espace intermédiaire (d1).

9. Agencement d'engrenage selon l'une quelconque des revendications précédentes, dans lequel la couronne (10) est susceptible de s'aligner relativement avec l'élément de couplage (60) en fonction d'un sens de rotation.

10. Agencement d'engrenages selon l'une quelconque des revendications précédentes, dans lequel la deuxième roue dentée (11b) de l'agencement de roues dentées (11a, 11b) de la couronne (10) comprend des saillies (45), qui sont susceptibles de désactiver le au moins un cliquet de freinage (BP) et qui sont disposées, ajustées et orientables de sorte d'empêcher le au moins un cliquet de freinage (BP) d'un engagement de transmission de couple avec la deuxième roue dentée (12b) de l'élément de couplage (60) lors d'une transmission de couple d'entrainement sur le chemin P2, un contact du au moins un cliquet de freinage (BP) avec la deuxième roue dentée (12b) de l'élément de couplage (60) étant possible durant la transmission du couple de freinage.

11. Agencement d'engrenages selon l'une quelconque des revendications précédentes, dans lequel les saillies (45) de désactivation dudit au moins un cliquet de freinage (BP) sont disposées, ajustées et orientables de sorte que, lors de la transmission d'un couple de d'entrainement ou de freinage sur le chemin P1, le au moins un cliquet d'entraînement (DP), et/ou au moins un cliquet de freinage (BP) peut entrer en contact avec la deuxième roue dentée (12b) de l'élément de couplage (60).

12. Agencement d'engrenages selon l'une quelconque des revendications précédentes, dans lequel le ressort bague (40) est, au moyen d'un crochet (41) qui est disposé avec du jeu dans un évidement périphérique (42) sur la partie du côté sorti (4b) du support de roue planétaire (4a, 4b) du premier train planétaire (4), alternativement en prise avec cet évidement (42).

13. Agencement d'engrenages selon l'une quelconque des revendications précédentes, dans lequel le ressort bague (40) est placé dans une rainure périphérique interne de la couronne (10).

14. Agencement d'engrenages selon l'une quelconque des revendications précédentes, dans lequel est prévu un dispositif sélectif de sortie ou de poussée (27), qui est activable par déplacement longitudinal au moyen d'un dispositif de commande (8), de telle sorte que la sorti arrive au support de moyeu (3), ou bien par un premier embrayage ou couplage de poussée (26), ou bien par un deuxième embrayage ou couplage de poussée (28).

15. Agencement d'engrenages selon l'une quelconque des revendications précédentes, dans lequel des parties de freinage (82) sont couplées à un boîtier à rouleaux (81) et peuvent être poussées radialement vers l'extérieur en fonctionnement de freinage.

16. Agencement d'engrenages selon l'une quelconque des revendications précédentes, dans lequel au moins un embrayage ou couplage de roue solaire (21, 22) commandable par le dispositif de commande (8) est disposé entre au moins une roue solaire (23, 24) du premier train planétaire (4) et un arbre fixe (1).

17. Agencement d'engrenages selon l'une quelconque des revendications précédentes, dans lequel l'élément de couplage (60) est susceptible de coupler deux trains planétaires (4, 5), de sorte qu'est obtenue une synchronisation permanente entre les deux trains planétaires (4, 5).

18. Agencement d'engrenages selon l'une quelconque des revendications précédentes, dans lequel le dispositif de commande (8) est activable, de sorte que résulte du pilotage dudit au moins un couplage de roue solaire (21, 22) et dudit dispositif sélectif de poussée (27) une pluralité de vitesses (rapports).

19. Agencement d'engrenages selon l'une quelconque des revendications, dans lequel le premier train planétaire (4) a deux étages et le deuxième train planétaire (5) a un seul étage de sorte qu'une boîte à cinq vitesses est obtenue.

20. Agencement d'engrenages selon l'une quelconque des revendications précédentes, dans lequel le un chemin de transmission de couple de freinage (BP1) correspond sensiblement au chemin de transmission du premier rapport (de la première vitesse) (DP1), ne menant toutefois pas au support de moyeu par le deuxième embrayage de sortie ou couplage de poussée (28), mais par le mécanisme de freinage (8).
